# EUROPEAN PATENT APPLICATION

(11) **EP 4 561 250 A1**
(43) Date of publication of application: **28.05.2025**
(21) Application number: 23849322.5
(22) Date of filing: 31.07.2023
(51) Int. Cl.: H04W 76/11

(54) **COMMUNICATION METHOD AND COMMUNICATION DEVICE**

(30) Priority: 04.08.2022 CN 202210932823
(71) Applicant: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN)
(74) Representative: Grünecker Patent- und Rechtsanwälte PartG mbB
(86) International application number: PCT/CN2023/110089
(87) International publication number: WO 2024/027614

(57) **Abstract**

This application provides a communication method, a communication apparatus, and a communication system. The communication method is applied to a first relay device. The communication method includes: receiving a first request message from a source terminal device; and when transmission quality that is of a first relay device and that is determined based on the first request message meets a first condition and/or a capability of the first relay device meets a condition related to quality of service, sending a second request message to a target terminal device based on the first request message. Both the first request message and the second request message are used to request to discover the target terminal device, and the first request message and the second request message each include an identifier of the source terminal device and an identifier of the target terminal device. In addition, the second request message further includes an identifier of the first relay device. In this way, the first relay device that meets the requirement helps the source terminal device continue discovering the target terminal device, to ensure reliability of subsequent communication between the source terminal device and the target terminal device via the first relay device.

## Description

This application claims priority to Chinese Patent Application No. 202210932823.2, filed with the China National Intellectual Property Administration on August 4, 2022 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

To improve coverage or capacity of a sidelink (sidelink, SL), a user equipment (user equipment, UE)-to-UE relay (UE-to-UE relay) technology, that is, a technology in which a source terminal device communicates with a target terminal device via a relay terminal device, may be used.

In a UE-to-UE relay scenario, there may be a plurality of relay terminal devices between a source terminal device and a target terminal device that have a unicast communication requirement. In this case, one relay terminal device needs to be selected from the plurality of relay terminal devices as a relay device for unicast communication between the source terminal device and the target terminal device, that is, a unicast communication path needs to be selected between the source terminal device and the target terminal device. Therefore, how to select a proper relay terminal device from the plurality of relay terminal devices is critical to reliability of the unicast communication between the source terminal device and the target terminal device.

### SUMMARY

Embodiments of this application provide a communication method and a communication apparatus. The communication method can ensure reliability of unicast communication between a source terminal device and a target terminal device.

According to a first aspect, a communication method is provided. The communication method may be performed by a first relay device, or may be performed by a chip or a circuit of the first relay device. This is not limited in this application. For ease of description, an example in which the method is performed by the first relay device is used for description below.

The communication method includes: The first relay device receives a first request message from a source terminal device. The first request message is used to request to discover a target terminal device, and the first request message includes an identifier of the source terminal device and an identifier of the target terminal device. When transmission quality of the first relay device meets a first condition and/or a capability of the first relay device meets a second condition, the first relay device sends a second request message to the target terminal device based on the first request message. The transmission quality of the first relay device is determined based on the first request message. The second condition includes a condition related to quality of service QoS. The second request message is used to request to discover the target terminal device, and the second request message includes the identifier of the source terminal device, the identifier of the target terminal device, and an identifier of the first relay device.

In this embodiment of this application, only when the transmission quality of the first relay device meets the condition, and/or the capability of the first relay device meets the condition related to quality of service QoS, the first relay terminal device sends, to the target terminal device, the request message requesting to discover the target terminal device. In other words, the transmission quality of the first relay device and/or the QoS that can be provided by the first relay device meet/meets a corresponding requirement, and the first relay device helps the source terminal device continue discovering the target terminal device, to ensure reliability of subsequent communication between the source terminal device and the target terminal device via the first relay device.

In a possible implementation, that transmission quality of the first relay device meets a first condition includes: The transmission quality of the first relay device is greater than or equal to a first threshold; or the transmission quality of the first relay device is greater than or equal to a first threshold, and the transmission quality of the first relay device is less than or equal to a second threshold. The second threshold is greater than the first threshold.

When the transmission quality of the first relay device is greater than or equal to the first threshold, the first relay device helps the source terminal device continue discovering the target terminal device. In this way, it can be ensured that quality of transmission between the first relay device and the source terminal device can meet a corresponding requirement.

When the transmission quality of the first relay device is greater than or equal to the first threshold, the transmission quality of the first relay device is less than or equal to the second threshold, and the second threshold is greater than the first threshold, the first relay device helps the source terminal device continue discovering the target terminal device. In this way, it can be ensured that quality of transmission between the first relay device and the source terminal device can meet a corresponding requirement, and can also avoid a case in which there is no gain because the first relay device is excessively closed to the source terminal device.

In a possible implementation, the first request message includes a first quality of service QoS requirement of the source terminal device on the source terminal device and the target terminal device.

In a possible implementation, that a capability of the first relay device meets a second condition includes: The capability of the first relay device meets the first QoS requirement.

When the capability of the first relay device meets the first QoS requirement, the first relay device helps the source terminal device continue discovering the target terminal device. In this way, it can be ensured that the first relay device is proper to serve as a relay device between the source terminal device and the target terminal device.

In a possible implementation, the communication method further includes: The first relay device receives a first response message for the second request message from the target terminal device. The first relay device sends a second response message for the first request message to the source terminal device. The second response message includes the identifier of the first relay device and/or the identifier of the target terminal device.

In a possible implementation, that the first relay device sends a second response message for the first request message to the source terminal device includes: The first relay device determines, based on first reference information and/or second reference information, whether to send the second response message to the source terminal device. The first reference information includes transmission quality of the first response message. The second reference information includes whether a unicast connection is established between the first relay device and the source terminal device.

In a possible implementation, that the first relay device determines, based on first reference information, whether to send the second response message to the source terminal device includes: When the transmission quality of the first response message is greater than or equal to a third threshold, the first relay device determines to send the second response message to the source terminal device; or when the transmission quality of the first response message is greater than or equal to a third threshold and the transmission quality of the first response message is less than or equal to a fourth threshold, the first relay device determines to send the second response message to the source terminal device. The fourth threshold is greater than the third threshold.

When the transmission quality of the first response message is greater than or equal to the third threshold, the first relay device determines to send the second response message to the source terminal device. In this way, it can be ensured that quality of transmission between the first relay device and the source terminal device can meet a corresponding requirement. This further ensures reliability of subsequent communication between the source terminal device and the source terminal device via the first relay device.

When the transmission quality of the first response message is greater than or equal to the third threshold, and the transmission quality of the first response message is less than or equal to the fourth threshold, the first relay device determines to send the second response message to the source terminal device. The fourth threshold is greater than the third threshold. In this way, it can be ensured that quality of transmission between the first relay device and the source terminal device can meet a corresponding requirement, and can also avoid a case in which there is no gain because the first relay device is excessively closed to the source terminal device. This further ensures reliability of subsequent communication between the source terminal device and the source terminal device via the first relay device.

In a possible implementation, that the first relay device determines, based on second reference information, whether to send the second response message to the source terminal device includes: When the unicast connection is established between the first relay device and the source terminal device, the first relay device determines to send the second response message to the source terminal device.

When the unicast connection is established between the first relay device and the source terminal device, the first relay device determines to send the second response message to the source terminal device. In this way, the existing unicast connection between the first relay device and the source terminal device can be multiplexed, thereby reducing time for establishing a link between the first relay device and the source terminal device, to reduce time for establishing a link between the source terminal device and the target terminal device.

In a possible implementation, after the first relay device sends the second response message to the source terminal device, the communication method further includes: The first relay device receives a third request message from the source terminal device. The third request message is used to request to establish a first unicast connection, the third request message includes a second QoS requirement of the source terminal device on the first relay device and the target terminal device, and the first unicast connection is a connection between the source terminal device and the first relay device. When the capability of the first relay device meets the second QoS requirement, the first relay device establishes the first unicast connection to the source terminal device; or when the capability of the first relay device does not meet the second QoS requirement, the first relay device skips establishing the first unicast connection to the source terminal device.

When the capability of the first relay device meets the second QoS requirement of the source terminal device on the first relay device and the target terminal device, the first relay device establishes the unicast connection to the source terminal device. In this way, it can be ensured that the first relay device is proper to serve as a relay device between the source terminal device and the target terminal device.

In a possible implementation, after the first relay device establishes the first unicast connection to the source terminal device, the communication method further includes: The first relay device sends a fourth request message to the target terminal device. The fourth request message is used to request to establish a second unicast connection, and the second unicast connection is a connection between the target terminal device and the first relay device. The first relay device receives a third response message from the target terminal device. The third response message includes a third QoS requirement of the target terminal device on the first relay device and the source terminal device. When the capability of the first relay device meets the third QoS requirement, the first relay device establishes the second unicast connection to the target terminal device; or when the capability of the first relay device does not meet the third QoS requirement, the first relay device skips establishing the second unicast connection to the target terminal device.

The first relay device establishes the unicast connection to the target terminal device only when the capability of the first relay device meets the third QoS requirement of the target terminal device on the first relay device and the source terminal device. In this way, it can be ensured that the first relay device is proper to serve as a relay device between the source terminal device and the target terminal device.

In a possible implementation, when a first link is established between the source terminal device and the target terminal device, and transmission quality of a second link and/or a third link does not meet a quality transmission condition or the second link and/or the third link are/is interrupted, that the first request message is used to request to discover a target terminal device includes that the first request message is used to request to rediscover the target terminal device. The second link is a link between a second relay device and the target terminal device, and the third link is a link between the second relay device and the source terminal device.

According to a second aspect, a communication method is provided. The communication method may be performed by a target terminal device, or may be performed by a chip or a circuit of the target terminal device. This is not limited in this application. For ease of description, an example in which the method is performed by the target terminal device is used for description below.

The communication method includes: The target terminal device receives a first message from each of a plurality of first terminal devices. The first message is used to request to discover the target terminal device, and the first message includes an identifier of the first terminal device and an identifier of the target terminal device. The target terminal device determines at least one second terminal device in the plurality of first terminal devices based on first information, second information, and/or third information. The target terminal device sends a second message to the at least one second terminal device. The second message indicates that the target terminal device is discovered, and the second message includes the identifier of the target terminal device. The first information indicates a direct path or an indirect path between the first terminal device and the target terminal device, and quality of transmission between the first terminal device and the target terminal device. The quality of transmission between the first terminal device and the target terminal device is determined based on the first message. The second information indicates whether a unicast connection is established between the first terminal device and the target terminal device. The third information indicates a first quality of service QoS requirement of a source terminal device on the source terminal device and the target terminal device.

**In** this embodiment of this application, the target terminal device selects the second terminal device from the plurality of first terminal devices based on the direct path or the non-direct path between the first terminal device and the target terminal device, whether the unicast connection has been established, and/or the first QoS requirement of the source terminal device on the source terminal device and the target terminal device, to ensure that the second terminal device is properly selected. This further ensures reliability of subsequent communication between the second terminal device and the target terminal device.

**In** a possible implementation, that the target terminal device determines a plurality of second terminal devices in the plurality of first terminal devices based on the first information and the second information includes: The target terminal device determines, based on the first information, whether a first terminal device that meets a third condition exists in the plurality of first terminal devices. When a first terminal device that meets the third condition exists in the plurality of first terminal devices, the target terminal device determines the first terminal device that meets the third condition as the second terminal device; or when no first terminal device that meets the third condition exists in the plurality of first terminal devices, the target terminal device determines, based on the second information, whether a first terminal device that meets a fourth condition exists in the plurality of first terminal devices. The third condition includes that there is the direct path between the first terminal device and the target terminal device, and the quality of transmission between the first terminal device and the target terminal device is greater than or equal to a fifth threshold. The fourth condition includes that the unicast connection is established between the first terminal device and the target terminal device.

The target terminal device preferentially selects a first terminal device that has the direct path to the target terminal device as the second terminal device, where transmission quality of the direct path meets a corresponding requirement. In this way, quality of transmission between the target terminal device and the second terminal device can be ensured. In addition, a delay of communication between the target terminal device and the second terminal device can be further reduced. This further ensures reliability of subsequent communication between the target terminal device and the second terminal device (an example of the source terminal device). Then, if the target terminal device does not select the second terminal device that meets the fourth condition, the target terminal device selects the first terminal device that establishes the unicast connection to the target terminal device as the second terminal device. In this way, the existing unicast connection between the second terminal device and the target terminal device can be multiplexed, thereby reducing time for establishing a link between the second terminal device and the target terminal device.

In a possible implementation, that the target terminal device determines, based on the second information, whether a first terminal device that meets a fourth condition exists in the plurality of first terminal devices includes: When a first terminal device that meets the fourth condition exists in the plurality of first terminal devices, the target terminal device determines the first terminal device that meets the fourth condition as the second terminal device; or when no first terminal device that meets the fourth condition exists in the plurality of first terminal devices, the target terminal device determines the second terminal device in the plurality of first terminal devices based on fourth information. The fourth information includes the quality of transmission between the first terminal device and the target terminal device.

In a possible implementation, that the target terminal device determines the second terminal device in the plurality of first terminal devices based on fourth information includes: The target terminal device determines, based on the fourth information, whether a first terminal device that meets a fifth condition exists in the plurality of first terminal devices. When a first terminal device that meets the fifth condition exists in the plurality of first terminal devices, the target terminal device determines the first terminal device that meets the fifth condition as the second terminal device; or when no first terminal device that meets the fifth condition exists in the plurality of first terminal devices, the target terminal device determines, as the second terminal device, a first terminal device that has the direct path to the target terminal device in the plurality of first terminal devices. The fifth condition includes that there is the indirect path between the first terminal device and the target terminal device, and the quality of transmission between the first terminal device and the target terminal device is greater than or equal to a sixth threshold; or the fifth condition includes that there is the indirect path between the first terminal device and the target terminal device, and both the quality of transmission between the first terminal device and the target terminal device and quality of transmission between the first terminal device and the source terminal device are greater than a seventh threshold.

When the target terminal device does not select a first terminal device that meets the third condition and the fourth condition, the target terminal device may select a first terminal device from the indirect path as the second terminal device, where the quality of transmission between the first terminal device and the target terminal device meets a corresponding requirement, or the quality of transmission between the first terminal device and the target terminal device and the quality of transmission between the first terminal device and the source terminal device meet a corresponding requirement. In this way, the quality of transmission between the target terminal device and the second terminal device can be ensured, thereby ensuring reliability of subsequent communication between the source terminal device and the second terminal device.

When the target terminal device does not select a first terminal device that meets the third condition, the fourth condition, and the fifth condition, the target terminal device may directly determine, as the second terminal device, the first terminal device that has the direct path to the target terminal device. In this way, a delay of communication between the target terminal device and the second terminal device can be reduced.

In a possible implementation, the first message includes the quality of transmission between the first terminal device and the source terminal device.

In a possible implementation, when a plurality of second terminal devices are determined, the communication method further includes: The target terminal device determines a third terminal device in the plurality of second terminal devices, and uses the third terminal device as a final second terminal device. The third terminal device is a terminal device whose quality of transmission with the target terminal device is highest in the plurality of second terminal devices; or the third terminal device is a terminal device whose quality of transmission with the target terminal device and quality of transmission with the source terminal device are both highest in the plurality of second terminal devices.

In a possible implementation, that the target terminal device determines a plurality of second terminal devices in the plurality of first terminal devices based on the second information includes: The target terminal device determines, as the second terminal device, a first terminal device that has established a unicast connection to the target terminal device in the plurality of first terminal devices.

The target terminal device preferentially selects the first terminal device that establishes the unicast connection to the target terminal device as the second terminal device. In this way, the existing unicast connection between the second terminal device and the target terminal device can be multiplexed, thereby reducing time for establishing a link between the second terminal device and the target terminal device, to reduce time for establishing a link between the source terminal device and the target terminal device.

In a possible implementation, that the target terminal device determines, as the second terminal device, a first terminal device that has established a unicast connection to the target terminal device in the plurality of first terminal devices includes: The target terminal device determines, as the second terminal device, a first terminal device that has established a unicast connection to the target terminal device in the plurality of first terminal devices and whose quality of transmission with the target terminal device is greater than or equal to an eighth threshold.

The target terminal device preferentially selects, as the second terminal device, the first terminal device that establishes the unicast connection to the target terminal device and whose quality of transmission with the target terminal device is greater than or equal to the eighth threshold. In this way, the existing unicast connection between the second terminal device and the target terminal device can be multiplexed, thereby reducing time for establishing a link between the second terminal device and the target terminal device, to reduce time for establishing a link between the source terminal device and the target terminal device. This can further ensure reliability of subsequent communication between the second terminal device and the target terminal device.

In a possible implementation, that the target terminal device determines a plurality of second terminal devices in the plurality of first terminal devices based on the third information includes: The target terminal device determines, as the second terminal device, a first terminal device that meets the first QoS requirement in the plurality of first terminal devices.

In a possible implementation, the first message includes the first QoS requirement.

According to a third aspect, a communication method is provided. The communication method may be performed by a source terminal device, or may be performed by a chip or a circuit of the source terminal device. This is not limited in this application. For ease of description, an example in which the method is performed by the source terminal device is used for description below.

The communication method includes: The source terminal device sends a first request message. The first request message is used to request to discover a target terminal device, and the first request message includes an identifier of a source terminal device and an identifier of the target terminal device. The source terminal device receives a third message from each of a plurality of second terminal devices. The third message indicates that the target terminal device is discovered, and the third message includes an identifier of the second terminal device or the third message includes the identifier of the second terminal device and the identifier of the target terminal device. The source terminal device determines a fourth terminal device in the plurality of second terminal devices based on sixth information and/or seventh information. The source terminal device establishes a unicast connection to the target terminal device via the fourth terminal device. The sixth information indicates a direct path or an indirect path between the second terminal device and the source terminal device, and quality of transmission between the second terminal device and the source terminal device. The quality of transmission between the second terminal device and the source terminal device is determined based on the third message. The seventh information indicates whether a unicast connection is established between the second terminal device and the source terminal device.

In this embodiment of this application, the source terminal device selects the fourth terminal device from the plurality of second terminal devices based on the direct path or the indirect path between the second terminal device and the source terminal device and/or whether the unicast connection has been established. This can be ensured that the fourth terminal device is properly selected. This further ensures reliability of subsequent communication between the fourth terminal device and the source terminal device.

In a possible implementation, that the source terminal device determines a fourth terminal device in the plurality of second terminal devices based on sixth information and seventh information includes: The source terminal device determines, based on the sixth information, whether a fourth terminal device that meets a sixth condition exists in the plurality of second terminal devices. When a second terminal device that meets the sixth condition exists in the plurality of second terminal devices, the source terminal device determines the second terminal device that meets the sixth condition as the fourth terminal device; or when no second terminal device that meets the sixth condition exists in the plurality of second terminal devices, the source terminal device determines, based on the seventh information, whether a second terminal device that meets a seventh condition exists in the plurality of second terminal devices. The sixth condition includes that there is the direct path between the second terminal device and the source terminal device, and the quality of transmission between the second terminal device and the source terminal device is greater than or equal to a ninth threshold. The seventh condition includes that the unicast connection is established between the second terminal device and the source terminal device.

The source terminal device preferentially selects a second terminal device that has the direct path to the source terminal device as the fourth terminal device, where transmission quality of the direct path meets a corresponding requirement. In this way, quality of transmission between the source terminal device and the fourth terminal device can be ensured. In addition, a delay of communication between the source terminal device and the fourth terminal device can be further reduced. This further ensures reliability of subsequent communication between the source terminal device and the fourth terminal device (an example of the target terminal device). Then, if the source terminal device does not select the second terminal device that meets the sixth condition, the source terminal device selects the second terminal device that establishes the unicast connection to the source terminal device as the fourth terminal device. In this way, the existing unicast connection between the fourth terminal device and the source terminal device can be multiplexed, thereby reducing time for establishing a link between the fourth terminal device and the source terminal device.

In a possible implementation, that the source terminal device determines, based on the seventh information, whether a second terminal device that meets a seventh condition exists in the plurality of second terminal devices includes: When a second terminal device that meets the seventh condition exists in the plurality of second terminal devices, the source terminal device determines the second terminal device that meets the seventh condition as the fourth terminal device; or when no second terminal device that meets the seventh condition exists in the plurality of second terminal devices, the source terminal device determines the fourth terminal device in the plurality of second terminal devices based on eighth information. The eighth information includes the quality of transmission between the second terminal device and the source terminal device; or the eighth information includes quality of transmission between the second terminal device and the target terminal device and the quality of transmission between the second terminal device and the source terminal device.

In a possible implementation, that the source terminal device determines the fourth terminal device in the plurality of second terminal devices based on eighth information includes: The source terminal device determines, based on the eighth information, whether a second terminal device that meets an eighth condition exists in the plurality of first terminal devices. When a second terminal device that meets the eighth condition exists in the plurality of second terminal devices, the source terminal device determines the second terminal device that meets the eighth condition as the fourth terminal device; or when no second terminal device that meets the eighth condition exists in the plurality of second terminal devices, the source terminal device determines, as the fourth terminal device, a second terminal device that has the direct path to the source terminal device in the plurality of second terminal devices. The eighth condition includes that there is the indirect path between the second terminal device and the source terminal device, and the quality of transmission between the second terminal device and the source terminal device is greater than or equal to a tenth threshold; or the eighth condition includes that there is the indirect path between the second terminal device and the source terminal device, and both the quality of transmission between the second terminal device and the target terminal device and the quality of transmission between the second terminal device and the source terminal device are greater than an eleventh threshold.

When the source terminal device does not select a second terminal device that meets the sixth condition and the seventh condition, the source terminal device may select a second terminal device from the indirect path as the fourth terminal device, where the quality of transmission between the second terminal device and the source terminal device meets a corresponding requirement, or the quality of transmission between the second terminal device and the source terminal device and the quality of transmission between the second terminal device and the source terminal device meet a corresponding requirement. In this way, the quality of transmission between the source terminal device and the fourth terminal device can be ensured, thereby ensuring reliability of subsequent communication between the source terminal device and the fourth terminal device.

When the source terminal device does not select a second terminal device that meets the sixth condition, the seventh condition, and the eighth condition, the source terminal device may directly determine, as the fourth terminal device, the second terminal device that has the direct path to the source terminal device. In this way, a delay of communication between the source terminal device and the fourth terminal device can be reduced.

In a possible implementation, the third message includes the quality of transmission between the second terminal device and the target terminal device.

In a possible implementation, when a plurality of fourth terminal devices are determined, the communication method further includes: The source terminal device determines a fifth terminal device in the plurality of fourth terminal devices, and uses the fifth terminal device as a final fourth terminal device. The fifth terminal device is a terminal device whose quality of transmission with the target terminal device is highest in the plurality of fourth terminal devices; or the fifth terminal device is a terminal device whose quality of transmission with the target terminal device and quality of transmission with the source terminal device are both highest in the plurality of fourth terminal devices.

In a possible implementation, that the source terminal device determines a fourth terminal device in the plurality of second terminal devices based on seventh information includes: The source terminal device determines, as the fourth terminal device, a second terminal device that has established a unicast connection to the source terminal device in the plurality of second terminal devices.

In a possible implementation, that the source terminal device determines, as the second terminal device, a first terminal device that has established a unicast connection to the target terminal device in the plurality of first terminal devices includes: The source terminal device determines, as the fourth terminal device, a first terminal device that has established a unicast connection to the target terminal device in the plurality of first terminal devices and whose quality of transmission with the target terminal device is greater than or equal to a twelfth threshold.

In a possible implementation, when a first link is established between the source terminal device and the target terminal device, and transmission quality of a second link and/or a third link does not meet a quality transmission condition or the second link and/or the third link are/is interrupted, that the first request message is used to request to discover a target terminal device includes that the first request message is used to request to rediscover the target terminal device. The second link is a link between a second relay device and the target terminal device, and the third link is a link between the second relay device and the source terminal device.

In a possible implementation, when the second link and/or the third link are/is interrupted, and before the source terminal device sends the first request message, the communication method further includes: The source terminal device receives a link interruption message sent by the second relay device. The link interruption message indicates that the link between the second relay device and the target terminal device is interrupted. The source terminal device releases an end-to-end unicast connection established between the source terminal device and the target terminal device, and context information of unicast connections associated with the second link and the third link.

According to a fourth aspect, a communication apparatus is provided. The communication apparatus may be a first relay device, or a chip or a circuit of the first relay device. This is not limited in this application.

The communication apparatus includes: a transceiver unit, configured to receive a first request message from a source terminal device, where the first request message is used to request to discover a target terminal device, and the first request message includes an identifier of the source terminal device and an identifier of the target terminal device; and a processing unit, configured to: when transmission quality of the communication apparatus meets a first condition and/or a capability of the communication apparatus meets a second condition, send a second request message to the target terminal device based on the first request message. The transmission quality of the communication apparatus is determined based on the first request message. The second condition includes a condition related to quality of service QoS. The second request message is used to request to discover the target terminal device, and the second request message includes the identifier of the source terminal device, the identifier of the target terminal device, and an identifier of the communication apparatus.

In a possible implementation, that transmission quality of the communication apparatus meets a first condition includes: The transmission quality of the communication apparatus is greater than or equal to a first threshold; or the transmission quality of the communication apparatus is greater than or equal to a first threshold, and the transmission quality of the communication apparatus is less than or equal to a second threshold. The second threshold is greater than the first threshold.

In a possible implementation, the first request message includes a first quality of service QoS requirement of the source terminal device on the source terminal device and the target terminal device.

In a possible implementation, that a capability of the communication apparatus meets a second condition includes: The capability of the communication apparatus meets the first QoS requirement.

In a possible implementation, the transceiver unit is further configured to: receive a first response message for the second request message from the target terminal device; and send a second response message for the first request message to the source terminal device. The second response message includes the identifier of the communication apparatus and/or the identifier of the target terminal device.

In a possible implementation, the processing unit is further configured to determine, based on first reference information and/or second reference information, whether to send the second response message to the source terminal device. The first reference information includes transmission quality of the first response message. The second reference information includes whether a unicast connection is established between the communication apparatus and the source terminal device.

In a possible implementation, the processing unit is further specifically configured to: when the transmission quality of the first response message is greater than or equal to a third threshold, determine to send the second response message to the source terminal device; or when the transmission quality of the first response message is greater than or equal to a third threshold and the transmission quality of the first response message is less than or equal to a fourth threshold, determine to send the second response message to the source terminal device. The fourth threshold is greater than the third threshold.

In a possible implementation, the processing unit is further specifically configured to: when the unicast connection is established between the communication apparatus and the source terminal device, determine to send the second response message to the source terminal device.

In a possible implementation, the transceiver unit is further configured to: receive a third request message from the source terminal device. The third request message is used to request to establish a first unicast connection, the third request message includes a second QoS requirement of the source terminal device on the communication apparatus and the target terminal device, and the first unicast connection is a connection between the source terminal device and the communication apparatus. When the capability of the communication apparatus meets the second QoS requirement, the processing unit is further specifically configured to establish the first unicast connection to the source terminal device; or when the capability of the communication apparatus does not meet the second QoS requirement, the processing unit is further specifically configured to skip establishing the first unicast connection to the source terminal device.

In a possible implementation, the transceiver unit is further configured to send a fourth request message to the target terminal device. The fourth request message is used to request to establish a second unicast connection, and the second unicast connection is a connection between the target terminal device and the communication apparatus. The transceiver unit is further configured to receive a third response message from the target terminal device. The third response message includes a third QoS requirement of the target terminal device on the communication apparatus and the source terminal device. When the capability of the communication apparatus meets the third QoS requirement, the transceiver unit is further specifically configured to establish the second unicast connection to the target terminal device; or when the capability of the communication apparatus does not meet the third QoS requirement, the transceiver unit is further specifically configured to skip establishing the second unicast connection to the target terminal device.

In a possible implementation, when a first link is established between the source terminal device and the target terminal device, and transmission quality of a second link and/or a third link does not meet a quality transmission condition or the second link and/or the third link are/is interrupted, that the first request message is used to request to discover a target terminal device includes that the first request message is used to request to rediscover the target terminal device. The second link is a link between a second relay device and the target terminal device, and the third link is a link between the second relay device and the source terminal device.

For technical effects of any possible implementation of the fourth aspect, refer to technical effects of a corresponding implementation of the first aspect. Details are not described herein again.

According to a fifth aspect, a communication apparatus is provided. The communication apparatus may be a target terminal device, or a chip or a circuit of the target terminal device. This is not limited in this application.

The communication apparatus includes: a transceiver unit, configured to receive a first message from each of a plurality of first terminal devices, where the first message is used to request to discover the communication apparatus, and the first message includes an identifier of the first terminal device and an identifier of the communication apparatus; and a processing unit, configured to determine at least one second terminal device in the plurality of first terminal devices based on first information, second information, and/or third information. The transceiver unit is further configured to send a second message to the at least one second terminal device. The second message indicates that the communication apparatus is discovered, and the second message includes the identifier of the communication apparatus. The first information indicates a direct path or an indirect path between the first terminal device and the communication apparatus, and quality of transmission between the first terminal device and the communication apparatus. The quality of transmission between the first terminal device and the communication apparatus is determined based on the first message. The second information indicates whether a unicast connection is established between the first terminal device and the communication apparatus. The third information indicates a first quality of service QoS requirement of a source terminal device on the source terminal device and the communication apparatus.

In a possible implementation, the processing unit is specifically configured to: determine, based on the first information, whether a first terminal device that meets a third condition exists in the plurality of first terminal devices; and when a first terminal device that meets the third condition exists in the plurality of first terminal devices, determine the first terminal device that meets the third condition as the second terminal device; or when no first terminal device that meets the third condition exists in the plurality of first terminal devices, determine, based on the second information, whether a first terminal device that meets a fourth condition exists in the plurality of first terminal devices. The third condition includes that there is the direct path between the first terminal device and the communication apparatus, and the quality of transmission between the first terminal device and the communication apparatus is greater than or equal to a fifth threshold. The fourth condition includes that the unicast connection is established between the first terminal device and the communication apparatus.

In a possible implementation, the processing unit is further specifically configured to: when a first terminal device that meets the fourth condition exists in the plurality of first terminal devices, determine the first terminal device that meets the fourth condition as the second terminal device; or when no first terminal device that meets the fourth condition exists in the plurality of first terminal devices, determine the second terminal device in the plurality of first terminal devices based on fourth information. The fourth information includes the quality of transmission between the first terminal device and the communication apparatus.

In a possible implementation, the processing unit is further specifically configured to: determine, based on the fourth information, whether a first terminal device that meets a fifth condition exists in the plurality of first terminal devices; and when a first terminal device that meets the fifth condition exists in the plurality of first terminal devices, determine the first terminal device that meets the fifth condition as the second terminal device; or when no first terminal device that meets the fifth condition exists in the plurality of first terminal devices, determine, as the second terminal device, a first terminal device that has the direct path to the communication apparatus in the plurality of first terminal devices. The fifth condition includes that there is the indirect path between the first terminal device and the communication apparatus, and the quality of transmission between the first terminal device and the communication apparatus is greater than or equal to a sixth threshold; or the fifth condition includes that there is the indirect path between the first terminal device and the communication apparatus, and both the quality of transmission between the first terminal device and the communication apparatus and quality of transmission between the first terminal device and the source terminal device are greater than a seventh threshold.

In a possible implementation, the first message includes the quality of transmission between the first terminal device and the source terminal device.

In a possible implementation, the processing unit is further configured to: determine a third terminal device in the plurality of second terminal devices, and use the third terminal device as a final second terminal device. The third terminal device is a terminal device whose quality of transmission with the communication apparatus is highest in the plurality of second terminal devices; or the third terminal device is a terminal device whose quality of transmission with the communication apparatus and quality of transmission with the source terminal device are both highest in the plurality of second terminal devices.

In a possible implementation, the processing unit is further specifically configured to determine, as the second terminal device, a first terminal device that has established a unicast connection to the communication apparatus in the plurality of first terminal devices.

In a possible implementation, the processing unit is further specifically configured to determine, as the second terminal device, a first terminal device that has established a unicast connection to the communication apparatus in the plurality of first terminal devices and whose quality of transmission with the communication apparatus is greater than or equal to an eighth threshold.

In a possible implementation, the processing unit is further specifically configured to determine, as the second terminal device, a first terminal device that meets the first QoS requirement in the plurality of first terminal devices.

In a possible implementation, the first message includes the first QoS requirement.

For technical effects of any possible implementation of the fifth aspect, refer to technical effects of a corresponding implementation of the second aspect. Details are not described herein again.

According to a sixth aspect, a communication apparatus is provided. The communication apparatus may be a source terminal device, or a chip or a circuit of the source terminal device. This is not limited in this application.

The communication apparatus includes: a transceiver unit, configured to send a first request message, where the first request message is used to request to discover a target terminal device, and the first request message includes an identifier of the source terminal device and an identifier of the target terminal device, where the transceiver unit is further configured to receive a third message from each of a plurality of second terminal devices, the third message indicates that the target terminal device is discovered, and the third message includes an identifier of the second terminal device or the third message includes the identifier of the second terminal device and the identifier of the target terminal device; and a processing unit, configured to determine a fourth terminal device in the plurality of second terminal devices based on sixth information and/or seventh information. The processing unit is further configured to establish a unicast connection to the target terminal device via the fourth terminal device. The sixth information indicates a direct path or an indirect path between the second terminal device and the source terminal device, and quality of transmission between the second terminal device and the source terminal device. The quality of transmission between the second terminal device and the source terminal device is determined based on the third message. The seventh information indicates whether a unicast connection is established between the second terminal device and the source terminal device.

In a possible implementation, the processing unit is further configured to: determine, based on the sixth information, whether a fourth terminal device that meets a sixth condition exists in the plurality of second terminal devices; and when a second terminal device that meets the sixth condition exists in the plurality of second terminal devices, determine the second terminal device that meets the sixth condition as the fourth terminal device; or when no second terminal device that meets the sixth condition exists in the plurality of second terminal devices, determine, based on the seventh information, whether a second terminal device that meets a seventh condition exists in the plurality of second terminal devices. The sixth condition includes that there is the direct path between the second terminal device and the source terminal device, and the quality of transmission between the second terminal device and the source terminal device is greater than or equal to a ninth threshold. The seventh condition includes that the unicast connection is established between the second terminal device and the source terminal device.

In a possible implementation, the processing unit is further configured to: when a second terminal device that meets the seventh condition exists in the plurality of second terminal devices, determine the second terminal device that meets the seventh condition as the fourth terminal device; or when no second terminal device that meets the seventh condition exists in the plurality of second terminal devices, determine the fourth terminal device in the plurality of second terminal devices based on eighth information. The eighth information includes the quality of transmission between the second terminal device and the source terminal device; or the eighth information includes quality of transmission between the second terminal device and the target terminal device and the quality of transmission between the second terminal device and the source terminal device.

In a possible implementation, the processing unit is further specifically configured to: determine, based on the eighth information, whether a second terminal device that meets an eighth condition exists in the plurality of first terminal devices; and when a second terminal device that meets the eighth condition exists in the plurality of second terminal devices, determine the second terminal device that meets the eighth condition as the fourth terminal device; or when no second terminal device that meets the eighth condition exists in the plurality of second terminal devices, determine, as the fourth terminal device, a second terminal device that has the direct path to the source terminal device in the plurality of second terminal devices. The eighth condition includes that there is the indirect path between the second terminal device and the source terminal device, and the quality of transmission between the second terminal device and the source terminal device is greater than or equal to a tenth threshold; or the eighth condition includes that there is the indirect path between the second terminal device and the source terminal device, and both the quality of transmission between the second terminal device and the target terminal device and quality of transmission between the second terminal device and the source terminal device are greater than an eleventh threshold.

In a possible implementation, the third message includes the quality of transmission between the second terminal device and the target terminal device.

In a possible implementation, the processing unit is further configured to: determine a fifth terminal device in the plurality of fourth terminal devices, and use the fifth terminal device as a final fourth terminal device. The fifth terminal device is a terminal device whose quality of transmission with the target terminal device is highest in the plurality of fourth terminal devices; or the fifth terminal device is a terminal device whose quality of transmission with the target terminal device and quality of transmission with the source terminal device are both highest in the plurality of fourth terminal devices.

In a possible implementation, the processing unit is further specifically configured to determine, as the fourth terminal device, a second terminal device that has established a unicast connection to the source terminal device in the plurality of second terminal devices.

In a possible implementation, the processing unit is further specifically configured to determine, as the fourth terminal device, a first terminal device that has established a unicast connection to the target terminal device in the plurality of first terminal devices and whose quality of transmission with the target terminal device is greater than or equal to a twelfth threshold.

In a possible implementation, when a first link is established between the source terminal device and the target terminal device, and transmission quality of a second link and/or a third link does not meet a quality transmission condition or the second link and/or the third link are/is interrupted, that the first request message is used to request to discover a target terminal device includes that the first request message is used to request to rediscover the target terminal device. The second link is a link between a second relay device and the target terminal device, and the third link is a link between the second relay device and the source terminal device.

In a possible implementation, when the second link and/or the third link are/is interrupted, and before the source terminal device sends the first request message, the transceiver unit is further configured to receive a link interruption message sent by the second relay device. The link interruption message indicates that the link between the second relay device and the target terminal device is interrupted. The processing unit is further configured to release an end-to-end unicast connection established between the source terminal device and the target terminal device, and context information of unicast connections associated with the second link and the third link.

For technical effects of any possible implementation of the sixth aspect, refer to technical effects of a corresponding implementation of the third aspect. Details are not described herein again.

According to a seventh aspect, a communication apparatus is provided, including one or more processors, a memory, and one or more computer programs. The one or more computer programs are stored in the memory. The one or more computer programs include instructions. When the instructions are executed by the communication apparatus, the communication apparatus is enabled to perform the communication method in any possible implementation of the first aspect to the third aspect.

According to an eighth aspect, a processor is provided, configured to perform the communication method in any possible implementation of the first aspect to the third aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a chip system is provided, including a processor, configured to invoke a computer program from a memory and run the computer program, to enable a communication device equipped with the chip system to perform the communication method in any possible implementation of the first aspect to the third aspect.

Optionally, in an implementation, a chip further includes the memory. The memory stores a computer program or instructions. The processor is configured to execute the computer program or the instructions stored in the memory. When the computer program or the instructions are executed, the processor is configured to perform the communication method in any possible implementation of the first aspect to the third aspect.

According to a tenth aspect, a computer program product including instructions is provided. When the computer program product runs on a communication apparatus, the communication apparatus is enabled to perform the communication method in any possible implementation of the first aspect to the third aspect.

According to an eleventh aspect, a computer-readable storage medium is provided. The storage medium may be non-volatile. The storage medium includes instructions. When the instructions are run on a communication apparatus, the communication apparatus is enabled to perform the communication method in any possible implementation of the first aspect to the third aspect.

According to a twelfth aspect, a chip is provided, including at least one processor and an interface circuit. The interface circuit is configured to provide program instructions or data for the at least one processor. The at least one processor is configured to execute the program instructions, to implement the communication method in any possible implementation of the first aspect to the third aspect.

According to a thirteenth aspect, a communication system is provided, including a first relay device, a target terminal device, and/or a source terminal device. The first relay device is configured to perform the communication method in any possible implementation of the first aspect. The target terminal device is configured to perform the communication method in any possible implementation of the second aspect. The source terminal device is configured to perform the communication method in any possible implementation of the third aspect.

### BRIEF DESCRIPTION OF DRAWINGS

FIG. 1 is a diagram of an architecture of a communication system applicable to an embodiment of this application;
FIG. 2 is a diagram of a protocol stack of the communication system shown in FIG. 1 based on L2;
FIG. 3 to FIG. 7 are example flowcharts of a communication method according to embodiments of this application;
FIG. 8 is a schematic flowchart of a communication apparatus according to an embodiment of this application; and
FIG. 9 is a schematic flowchart of a communication apparatus according to an embodiment of this application.

### DESCRIPTION OF EMBODIMENTS

The following describes technical solutions in embodiments of this application with reference to the accompanying drawings.

For ease of understanding of embodiments of this application, the following descriptions are first provided before embodiments of this application are described.

First, in embodiments of this application, "indication" may include a direct indication and an indirect indication, or may include an explicit indication and an implicit indication. Information indicated by a specific signal (for example, the following first information) is referred to as to-be-indicated information. In a specific implementation process, the to-be-indicated information may be indicated in a plurality of manners. By way of example and not limitation, the to-be-indicated information may be directly indicated by, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent.

Second, the terms "first", "second", and various numbers in the following embodiments are merely used for differentiation for ease of description, but are not intended to limit the scope of embodiments of this application. For example, different messages are differentiated or different information is differentiated.

Third, "a plurality of" in embodiments of this application usually means two or more.

Fourth, a direct path between two terminal devices in embodiments of this application may mean that the two terminal devices may receive broadcast or multicast information from each other without forwarding via another terminal device. In this case, no unicast connection link is established between the two terminal devices.

For example, a direct path between a first terminal device and a target terminal device in the following descriptions may be understood as follows: The first terminal device can directly communicate with the target terminal device without forwarding via another terminal device. In this case, no link is established between the first terminal device and the target terminal device.

Fifth, an indirect path in embodiments of this application means that two terminal devices can communicate with each other only through forwarding via another terminal device. In this case, no link is established between the two terminal devices.

For example, an indirect path between a first terminal device and a target terminal device in the following descriptions may be understood as follows: The first terminal device can communicate with the target terminal device only through forwarding by another terminal device. In this case, no link is established between the first terminal device and the target terminal device.

Sixth, in embodiments of this application, an example in which a source terminal device serves as an active party to request to discover a target terminal device is used, and this should not constitute a limitation on this application. For example, in some embodiments, the target terminal device may alternatively serve as an active party to request to discover the source terminal device. In this case, only execution steps performed by the target terminal device and execution steps performed by the source terminal device in the example in which the source terminal device is used to request to discover the target terminal device need to be exchanged.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

In embodiments of this application, the terminal device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux^{®} operating system, a Unix^{®} operating system, an Android^{®} operating system, an iOS^{®} operating system, or a Windows^{®} operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device or a functional module that is in the terminal device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, contain, and/or carry instructions and/or data.

In a wireless communication system, terminal devices may perform data communication with each other via a network device, or the terminal devices may directly perform communication with each other without the network device. In this way, a communication delay can be effectively reduced.

An interface between the terminal devices is referred to as a PC5 interface, and the PC5 interface is similar to a Uu interface between the terminal device and the network device.

A link between the terminal devices is referred to as an SL, and a typical application scenario of SL communication is vehicle-to-everything (vehicle-to-everything, V2X). In the vehicle-to-everything, each vehicle may be considered as a terminal device.

The SL supports broadcast communication, unicast communication, and multicast communication. The following separately describes the broadcast communication, the unicast communication, and the multicast communication.

### (1) Broadcast communication

This is similar to broadcasting system information by the network device. To be specific, the terminal device sends data of a broadcast service to the outside without encryption. Any other terminal device within an effective reception scope may receive the data of the broadcast service if the terminal device is interested in the broadcast service.

### (2) Unicast communication

This is similar to data communication performed after a radio resource control (radio resource control, RRC) connection is established between the terminal device and the network device. In the unicast communication, the two terminal devices need to first establish a unicast connection. After the unicast connection is established, the two terminal devices perform the data communication based on negotiated identifiers (a source L2 ID and a destination L2 ID described below).

The unicast communication performed once on the SL corresponds to a pair of IDs: a source layer-2 identifier (source layer-2 identifier, L2 ID) and a destination layer-2 identifier (destination layer-2 identifier, destination L2 ID). A subheader of each SL media access control data protocol unit (media access control protocol data unit, MAC PDU) includes some bytes of the source L2 ID and some bytes of the destination L2 ID, so that data is transmitted to a correct receive end.

The data transmitted between the two terminal devices may be encrypted or may not be encrypted. Compared with the broadcast communication, in the unicast communication, the unicast communication can be performed between only two terminal devices between which the unicast connection is established.

### (3) Multicast communication

This means communication between all terminal devices in a communication group. Any terminal device in the group can receive and send data of a multicast service.

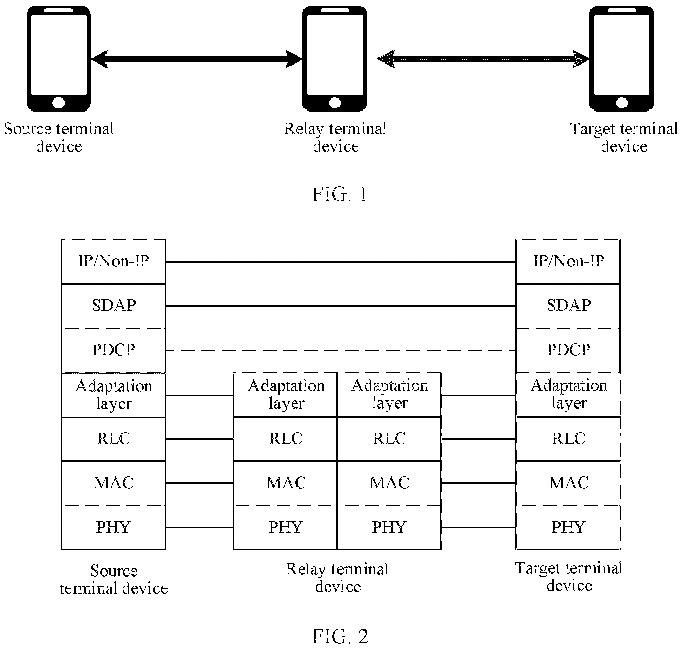

To improve coverage enhancement or capacity of the SL, a UE-to-UE relay technology may be used, that is, a technology in which a source terminal device communicates with a target terminal device via a relay terminal device. The following describes a UE-to-UE relay communication system provided in embodiment of this application with reference to FIG. 1 and FIG. 2.

FIG. 1 is a diagram of an architecture of a communication system applicable to an embodiment of this application.

For example, as shown in FIG. 1, the UE-to-UE relay communication system includes one source terminal device (which may also be referred to as an initiating terminal device, source UE), at least one relay terminal device (relay UE), and at least one target terminal device (target UE). For example, when there is a requirement for unicast communication between the source terminal device and the target terminal device, if a coverage signal between the source terminal device and the target terminal device is poor or the target terminal device is located outside a signal coverage area of the source terminal device (or a communication range of the source terminal device), data and signaling transmission between the source terminal device and the target terminal device may be implemented via the relay terminal device, to improve a coverage enhancement feature or capacity feature of an SL. In an L2-based relay manner, user plane data is relayed and forwarded below a packet data convergence protocol (packet data convergence protocol, PDCP) layer on the relay terminal device side.

It should be understood that FIG. 1 is merely a simplified diagram of an example for ease of understanding. The communication system may further include another device that is not drawn in FIG. 1.

Currently, UE-to-UE relay includes two possible implementations: a layer 3 (layer 3, L3)-based relay manner and an L2-based relay manner. In the L3-based relay manner, the user plane data is forwarded at an internet protocol (internet protocol, IP) layer. To be specific, the relay terminal device needs to parse, to an IP layer, a data packet sent by the source terminal device to the target terminal device, and determines, based on information like an IP address, to forward the packet to the target terminal device. In the L2-based relay manner, the user plane data is forwarded below a packet data convergence protocol (packet data convergence protocol, PDCP) layer. In this case, a user plane protocol stack is shown in FIG. 2.

FIG. 2 is a diagram of a protocol stack of the communication system shown in FIG. 1 based on L2.

For example, as shown in FIG. 2, a user plane protocol stack of the source terminal device includes an IP/non-IP (non-IP) layer, a service data adaptation protocol (service data adaptation protocol, SDAP) layer, a packet data convergence protocol (packet data convergence protocol, PDCP) layer, an adaptation (adaptation) layer, a radio link control (radio link control, RLC) layer, a medium access control (medium access control, MAC) layer, and a physical layer (physical layer, PHY).

A user plane protocol stack of the relay terminal device includes an adaptation layer, an RLC layer, a MAC layer, and a PHY layer.

A user plane protocol stack of the target terminal device includes an IP/non-IP layer, an SDAP layer, a PDCP layer, an adaptation layer, an RLC layer, a MAC layer, and a PHY.

Main functions of the adaptation layer include multiplexing and demultiplexing of a bearer, that is, supporting multiplexing of different bearers to one bearer, or splitting one bearer into different bearers. When an initiating terminal device communicates with a plurality of target terminal devices via one relay terminal device, to distinguish data belonging to different target terminal devices, a local identifier (local ID) needs to be allocated to each target terminal device, and the local identifier is carried in a data packet routing process, to indicate a target terminal device to which the data belongs.

The source terminal device exchanges information with the target terminal device via the PDCP layers, and the source terminal device exchanges information with the relay terminal device via the adaptation layers.

In the UE-to-UE relay communication system, to directly transmit information to the target terminal device, the source terminal device needs to discover, select, and connect to a relay terminal device.

A solution in which the source terminal device discovers the relay terminal device may include two discovery models.

### (1) Model A (model A)

In the model A, a terminal device having a relay capability actively broadcasts a discovery (discovery) message to surroundings. The discovery message indicates that the terminal device has the relay capability. In other words, the terminal device may serve as a relay terminal device for communication between two terminal devices.

### (2) Model B (model B)

In the model B, the source terminal device actively broadcasts a solicitation (solicitation) message to surroundings. The solicitation message is used to query whether there is a relay terminal device around. After receiving the solicitation message, a terminal device determines, based on the solicitation message and a status of the terminal device (for example, whether the terminal device has a relay capability), whether to return a response (response) message.

It should be noted that a solution in which the source terminal device discovers the relay terminal device in the communication method provided in embodiments of this application is the model B.

In the UE-to-UE relay communication system, there may be a plurality of relay terminal devices. In this case, after receiving the solicitation message broadcast by the source terminal device, all the plurality of relay terminal devices forward the solicitation message to the target terminal device. Then, the target terminal device may select one relay terminal device from the plurality of relay terminal devices, and return a response message to the selected relay terminal device. The relay terminal device forwards the response message to the source terminal device. Further, the source terminal device may be connected to and communicate with the target terminal device via the relay terminal device. In this way, quality of communication between the source terminal device and the target terminal device depends on the selected relay terminal device.

However, in the existing solution, it cannot be ensured that the relay terminal device selected from the plurality of relay terminal devices is proper, and reliability of unicast communication between the source terminal device and the target terminal device cannot be ensured.

Based on this, an embodiment of this application provides a communication method. The communication method can ensure that a selected relay terminal device is proper, to ensure reliability of unicast communication between a source terminal device and a target terminal device.

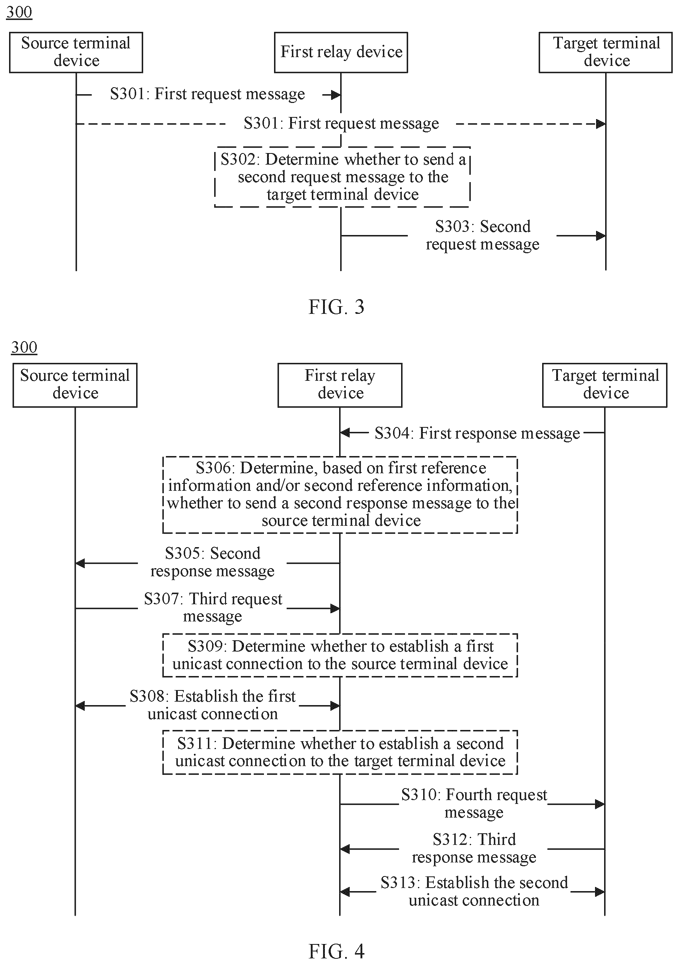

An example of the communication method provided in embodiments of this application is described in detail below with reference to FIG. 3.

FIG. 3 is an example flowchart of a communication method 300 according to an embodiment of this application.

For example, as shown in FIG. 3, the communication method 300 includes S301 to S303, and S302 is an optional step. The following describes S301 to S303 in detail.

S301: A source terminal device sends a first request message.

For example, the source terminal device may send the first request message in a broadcast or multicast manner.

The first request message is used to request to discover a target terminal device. The first request message includes an identifier of the source terminal device and an identifier of the target terminal device.

A type of the identifier of the terminal device is not limited in this embodiment of this application.

For example, the identifier of the terminal device may be a user information identifier of the terminal device, for example, an identifier at an application (application, APP) layer.

In this example, the identifier of the source terminal device may be an identifier of the source terminal device at the APP layer. The identifier of the target terminal device may be an identifier of the target terminal device at the APP layer.

In an example, the first request message may further include a type of the first request message. The type of the first request message may be understood as the foregoing discovery type.

It should be understood that this embodiment of this application is applicable to a case in which the type of the first request message is the model B.

In an example, the first request message may further include a relay service code (relay service code, RSC), and the RSC indicates a connection service that can be supported by a UE-to-UE relay.

In an example, the first request message may further include relay indication (relay_indication) information, and the relay indication information indicates whether to enable a relay device to participate in a procedure of the UE-to-UE relay. In other words, the relay indication information indicates whether the relay device is enabled to forward the first request message received by the relay device. For example, if the relay indication information indicates the relay terminal device to participate in the procedure, after receiving the relay indication information, the relay terminal device does not forward the relay terminal device to a next-hop terminal device. Herein, if the first request message includes the relay indication information, it may be considered that the first request message further is used to request to discover the relay terminal device.

Optionally, in some embodiments, when a first link is established between the source terminal device and the target terminal device, and transmission quality of a second link and/or a third link does not meet a quality transmission condition or the second link and/or the third link are/is interrupted (for example, a radio link failure (radio link failure, RLF)), that the first request message is used to request to discover a target terminal device includes that the first request message is used to request to rediscover the target terminal device.

The first link may be considered as a link established between the source terminal device and the target terminal device via a second relay device. The second link is a link between the second relay device and the target terminal device, and the third link is a link between the second relay device and the source terminal device.

Optionally, in this embodiment, the first request message may further carry a cause for rediscovering the target terminal device.

Optionally, in this embodiment, when the second link and/or the third link are/is interrupted, the second relay device may further send a link interruption message to the source terminal device. The link interruption message indicates that the link between the second relay device and the target terminal device is interrupted. After receiving the link interrupt message, the source terminal device may further release an end-to-end unicast connection established between the source terminal device and the target terminal device, and context information of unicast connections associated with the second link and the third link. The end-to-end unicast connection established between the source terminal device and the target terminal device may be understood as a logical unicast connection established between the source terminal device and the target terminal device via the relay device.

Based on S301, a terminal device within a communication range (or a communication distance) of the source terminal device can receive the first request message broadcast by the source terminal device.

In an example, if the target terminal device is within the communication range of the source terminal device, the target terminal device can directly receive the first request message broadcast by the source terminal device. Subsequently, the target terminal device directly sends a response message to the source terminal device, so that the source terminal device establishes the unicast connection to the target terminal device.

In another example, if the target terminal device is not within the communication range of the source terminal device, the target terminal device does not directly receive the first request message broadcast by the source terminal device. In this case, the source terminal device needs to continue discovering the target terminal device via the terminal device (which may be understood as the relay terminal device) within the communication range of the source terminal device, and establish the unicast connection to the target terminal device via the terminal device within the communication range of the source terminal device.

If the target terminal device is not within the communication range of the source terminal device, in an example, after receiving the first request message, the terminal device within the communication range of the source terminal device may directly perform S303 without performing S302. In another example, to ensure reliability of the unicast communication between the source terminal device and the target terminal device, the terminal device within the communication range of the source terminal device may further determine whether to continue helping the source terminal device discover the target terminal device. In other words, the terminal device within the communication range of the source terminal device needs to perform S302.

A quantity of terminal devices within the communication range of the source terminal device is not limited in this embodiment of this application.

The following first describes S302 by using an example in which the terminal device within the communication range of the source terminal device is a first relay device.

S302: The first relay device determines whether to send a second request message to the target terminal device.

The second request message is used to request to discover the target terminal device, and the second request message includes the identifier of the source terminal device, the identifier of the target terminal device, and an identifier of the first relay device.

The following describes S302 in detail by using a manner 1 to a manner 5 as examples.

Manner 1: The first relay device determines, based on whether transmission quality of the first relay device meets a first condition, whether to send the second request message to the target terminal device.

Specifically, when the transmission quality of the first relay device meets the first condition, the first relay device determines to send the second request message to the target terminal device; or when the transmission quality of the first relay device does not meet the first condition, the first relay device does not send the second request message to the target terminal device.

In an example, that the transmission quality of the first relay device meets the first condition includes: The transmission quality of the first relay device is greater than or equal to a first threshold. In this way, it can be ensured that quality of transmission between the first relay device and the source terminal device can meet a corresponding requirement.

In another example, the transmission quality of the first relay device is greater than or equal to a first threshold, and the transmission quality of the first relay device is less than or equal to a second threshold. The second threshold is greater than the first threshold. In this way, it can be ensured that quality of transmission between the first relay device and the source terminal device can meet a corresponding requirement, and can also avoid a case in which there is no gain because the first relay device is excessively closed to the source terminal device.

A manner in which the first relay device obtains the transmission quality of the first relay device is not limited in this application.

In an example, the transmission quality of the first relay device may be obtained by the first relay device based on the currently transmitted first request message.

For example, the transmission quality of the first relay device may be an RSRP value that is of the first request message and that is obtained by the first relay device by measuring reference signal received power (reference signal received power, RSRP) of the first request message.

A type of the transmission quality of the first relay device is not limited in this embodiment of this application. For example, in addition to the RSRP value of the first request message, the transmission quality of the first relay device may alternatively be a signal to interference plus noise ratio (signal to interference plus noise ratio, SINR) value, a reference signal received quality (reference signal received quality, RSRQ) value, a received signal strength indicator (received signal strength indicator, RSSI) value, or the like of the first request message.

In another example, the transmission quality of the first relay device may be obtained by the first relay device based on historically transmitted information.

Manner 2: The first relay device determines, based on whether a capability of the first relay device meets a second condition, whether to send the second request message to the target terminal device.

Specifically, when the capability of the first relay device meets the second condition, the first relay device determines to send the second request message to the target terminal device; or when the capability of the first relay device does not meet the second condition, the first relay device does not send the second request message to the target terminal device.

The second condition includes a condition related to quality of service QoS.

In an example, that the capability of the first relay device meets the second condition includes: The capability of the first relay device meets a first QoS requirement. The first QoS requirement is a first quality of service QoS requirement of the source terminal device on the source terminal device and the target terminal device. In other words, the capability of the first relay device can meet the first quality of service QoS requirement of the source terminal device on the source terminal device and the target terminal device.

A manner in which the first relay device obtains the first QoS requirement is not limited in this application.

In an example, the first QoS requirement may be predefined or preset. For example, the first QoS requirement may be specified in a communication protocol.

In another example, the first QoS requirement may be notified by the source terminal device to the first relay device. For example, the source terminal device may include the first QoS requirement in the first request message. Then, the first relay device may learn of the first QoS requirement.

For example, the QoS may include a priority, a packet error rate, a rate, a delay, a throughput, a packet loss rate, or the like.

Manner 3: The first relay device determines, based on whether transmission quality of the first relay device meets a first condition and whether a capability of the first relay device meets a second condition, whether to send the second request message to the target terminal device.

Specifically, in an example, when the transmission quality of the first relay device meets the first condition and the capability of the first relay device meets the second condition, the first relay device determines to send the second request message to the target terminal device; or when the transmission quality of the first relay device does not meet the first condition and/or the capability of the first relay device does not meet the second condition, the first relay device does not send the second request message to the target terminal device.

In another example, when the transmission quality of the first relay device meets the first condition or the capability of the first relay device meets the second condition, the first relay device determines to send the second request message to the target terminal device; or when the transmission quality of the first relay device does not meet the first condition and the capability of the first relay device does not meet the second condition, the first relay device does not send the second request message to the target terminal device.

For content that is not described in the manner 3, for example, the transmission quality of the first relay device, the first condition, and the second condition, refer to the related descriptions in the manner 1 and the manner 2. Details are not described herein again.

In the manner 1 to the manner 3, only when the transmission quality of the first relay device meets the condition, and/or the capability of the first relay device meets the condition related to quality of service QoS, the first relay terminal device sends, to the target terminal device, the request message requesting to discover the target terminal device. In other words, the transmission quality of the first relay device and/or the QoS that can be provided by the first relay device meet/meets a corresponding requirement, and the first relay device helps the source terminal device continue discovering the target terminal device, to ensure reliability of subsequent communication between the source terminal device and the target terminal device via the first relay device.

Manner 4: If the first request message carries the RSC, the first relay device determines, based on the RSC, whether to send the second request message to the target terminal device.

Specifically, when the RSC carried in the first request message is greater than or equal to R18, the first relay device determines to send the second request message to the target terminal device; or when the RSC carried in the first request message is less than R18, the first relay device does not send the second request message to the target terminal device.

It should be noted that, if the RSC carried in the first request message is less than R18, it may be understood that the source terminal device is a legacy terminal device (legacy UE), and does not support the UE-to-UE relay technology.

Manner 5: The first relay device determines, based on whether the first request message carries the relay indication (relay_indication) information, whether to send the second request message to the target terminal device.

Specifically, when the first request message carries the relay indication (relay_indication) information, the first relay device determines to send the second request message to the target terminal device. In this case, the second request message no longer carries the relay indication information. When the first request message does not carry the relay indication (relay_indication) information, the first relay device determines not to send the second request message to the target terminal device.

In the manner 4 and the manner 5, when the communication system supports the UE-to-UE relay technology, the first relay terminal device sends, to the target terminal device, the request message requesting to discover the target terminal device. To be specific, when the communication system supports the UE-to-UE relay technology, the first relay device can help the source terminal device continue discovering the target terminal device, to avoid a problem that occurs when the source terminal device subsequently establishes a connection to the target terminal device via the first relay device.

After S302, the first relay device sends the second request message to the target terminal device, namely, S303. Correspondingly, the target terminal device receives the second request message from the first relay device.

Optionally, in some embodiments, after receiving the first request message, the first relay device may directly perform S303 without performing S302.

Optionally, in some embodiments, after S303, the target terminal device may further send a response message to the source terminal device via the first relay device. In this case, as shown in FIG. 4, the communication method 300 further includes S304 and S305. The following describes S304 and S305 in detail.

S304: The target terminal device sends a first response message for the second request message to the first relay device. Correspondingly, the first relay device receives the first response message from the target terminal device.

S305: The first relay device sends a second response message for the first request message to the source terminal device. The second response message includes the identifier of the first relay device and/or the identifier of the target terminal device.

Optionally, in some embodiments, before S305, as shown in FIG. 4, the first relay device may further perform S306.

S306: The first relay device determines, based on first reference information and/or second reference information, whether to send the second response message to the source terminal device.

The first reference information includes transmission quality of the first response message, and the second reference information includes whether a unicast connection is established between the first relay device and the source terminal device.

In an example, that the first relay device determines, based on first reference information, whether to send the second response message to the source terminal device includes: When the transmission quality of the first response message is greater than or equal to a third threshold, the first relay device determines to send the second response message to the source terminal device. In this way, it can be ensured that quality of transmission between the first relay device and the source terminal device can meet a corresponding requirement. This further ensures reliability of subsequent communication between the source terminal device and the source terminal device via the first relay device.

In another example, when the transmission quality of the first response message is greater than or equal to a third threshold, and the transmission quality of the first response message is less than or equal to a fourth threshold, the first relay device determines to send the second response message to the source terminal device. The fourth threshold is greater than the third threshold. In this way, it can be ensured that quality of transmission between the first relay device and the source terminal device can meet a corresponding requirement, and can also avoid a case in which there is no gain because the first relay device is excessively closed to the source terminal device. This further ensures reliability of subsequent communication between the source terminal device and the source terminal device via the first relay device.

In an example, that the first relay device determines, based on second reference information, whether to send the second response message to the source terminal device includes: When the unicast connection is established between the first relay device and the source terminal device, the first relay device determines to send the second response message to the source terminal device. In this way, the existing unicast connection between the first relay device and the source terminal device can be multiplexed, thereby reducing time for establishing a link between the first relay device and the source terminal device, to reduce time for establishing a link between the source terminal device and the target terminal device.

Based on S301 to S305, the source terminal device may implement a process of discovering the target terminal device. Then, the source terminal device may establish a connection to the target terminal device.

Optionally, in some embodiments, in a process in which the source terminal device establishes the connection to the target terminal device, if the source terminal device does not establish a first unicast connection to the first relay device, as shown in FIG. 4, the source terminal device further needs to perform S307.

S307: The source terminal device sends a third request message to the first relay device. Correspondingly, the first relay device receives the third request message from the source terminal device.

The third request message is used to request to establish the first unicast connection.

In an example, after receiving the third request message, the first relay device may directly establish the first unicast connection to the source terminal device, namely, S308 shown in FIG. 4.

In another example, after receiving the third request message, to ensure reliability of unicast communication between the source terminal device and the target terminal device, the first relay device may further determine whether to establish the first unicast connection to the source terminal device, and establish the first unicast connection to the source terminal device only when establishing the first unicast connection to the source terminal device.

In this example, as shown in FIG. 4, the first relay device further needs to perform S309, and perform S308 when determining to establish the first unicast connection to the source terminal device.

S309: The first relay device determines whether to establish the first unicast connection to the source terminal device.

Specifically, when the capability of the first relay device meets a second QoS requirement, the first relay device establishes the first unicast connection to the source terminal device, namely, S313 shown in FIG. 4. When the capability of the first relay device does not meet the second QoS requirement, the first relay device does not establish the first unicast connection to the source terminal device. The second QoS requirement is a QoS requirement of the source terminal device on the first relay device and the target terminal device.

A manner in which the first relay device obtains the second QoS requirement is not limited in this application.

In an example, the second QoS requirement may be predefined or preset. For example, the second QoS requirement may be specified in a communication protocol.

In another example, the second QoS requirement may be notified by the source terminal device to the first relay device. For example, the source terminal device may include the second QoS requirement in the third request message. Then, the first relay device may learn of the second QoS requirement.

It should be noted that, that the first relay device does not establish the first unicast connection to the source terminal device may be understood as: The first relay device sends a rejection message to the source terminal device, or the first relay device does not perform any operation.

After the first relay device establishes the first unicast connection to the source terminal device, the first relay device further needs to establish a second unicast connection to the target terminal device. As shown in FIG. 4, the first relay device further needs to perform S310.

Step S310: The first relay device sends a fourth request message to the target terminal device. Correspondingly, the target terminal device receives the fourth request message from the first relay device.

The fourth request message is used to request to establish the second unicast connection, and the second unicast connection is a connection between the target terminal device and the first relay device.

In an example, before S310, to ensure the reliability of the unicast communication between the source terminal device and the target terminal device, the first relay device may further determine whether to establish the second unicast connection to the target terminal device, and performs S310 only when establishing the second unicast connection to the target terminal device.

In this example, as shown in FIG. 4, the first relay device further needs to perform S311, and perform S310 when determining to establish the second unicast connection to the target terminal device.

S311: The first relay device needs to determine whether to establish the second unicast connection to the target terminal device.

Specifically, when the capability of the first relay device meets a third QoS requirement, the first relay device establishes the second unicast connection to the target terminal device. When the capability of the first relay device does not meet the third QoS requirement, the first relay device does not establish the second unicast connection to the target terminal device. The third QoS requirement is a QoS requirement of the target terminal device on the first relay device and the source terminal device.

A manner in which the first relay device obtains the third QoS requirement is not limited in this application.

In an example, the third QoS requirement may be predefined or preset. For example, the third QoS requirement may be specified in a communication protocol.

In another example, the third QoS requirement may be notified by the source terminal device to the first relay device. For example, after S310, the source terminal device needs to perform S312 shown in FIG. 4. To be specific, the source terminal device sends a third response message to the first relay device, and includes the third QoS requirement in the third response message. Then, the first relay device may learn of the third QoS requirement.

Based on S307 to S313, the source terminal device may implement a process of establishing the unicast connection to the target terminal device via the first relay device.

The target terminal device may usually receive a plurality of request messages. For example, the target terminal device directly receives the request message sent by the source terminal device and/or receives, via the relay terminal device, the request message sent by the source terminal device. In this case, the target terminal device may directly send the response message to a sending body of the request message, to implement a process in which the source terminal device discovers the target terminal device. Then, after receiving the response message, the source terminal device establishes the unicast connection to the target terminal device. Optionally, in some embodiments, to ensure the reliability of the unicast communication between the source terminal device and the target terminal device, the target terminal device may further select at least one sending entity from sending entities that send the plurality of request messages, and send the response message to the at least one sending entity, to implement the process in which the source terminal device discovers the target terminal device. Then, after receiving the response message, the source terminal device establishes the unicast connection to the target terminal device.

Whether the plurality of request messages are directly sent by the source terminal device to the target terminal device or sent by the source terminal device to the target terminal device via the relay device is not limited in embodiments of this application.

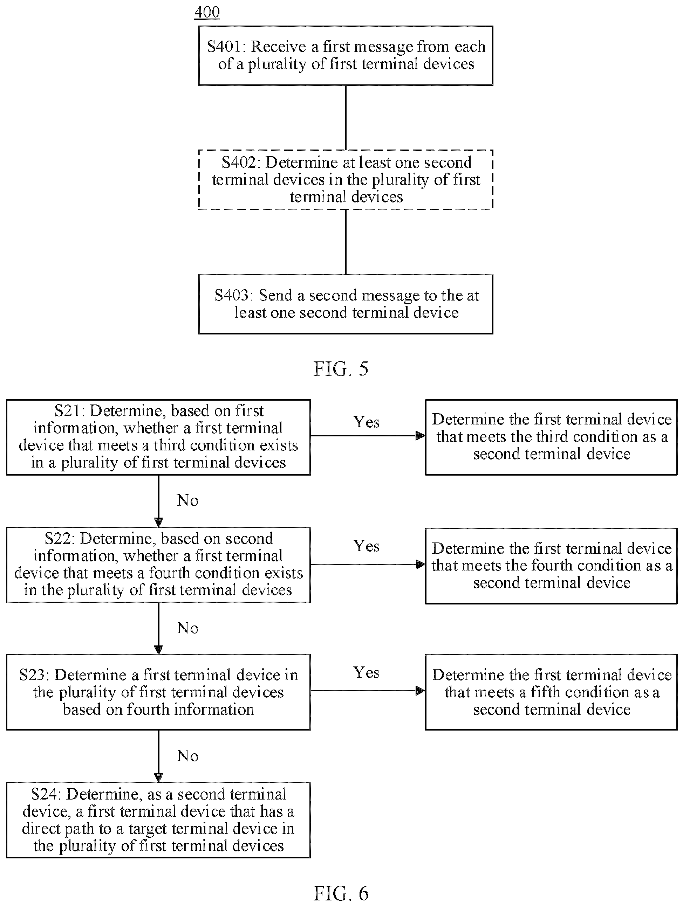

Another communication method provided in this application is described in detail below with reference to FIG. 5.

FIG. 5 is a schematic flowchart of a communication method 400 according to an embodiment of this application.

For example, as shown in FIG. 5, the communication method 400 includes S401 to S403, and S402 is an optional step. The following describes S401 to S403 in detail.

S401: A target terminal device receives a first message from each of a plurality of first terminal devices.

The first message is used to request to discover the target terminal device, and the first message includes an identifier of the first terminal device and an identifier of the target terminal device.

Optionally, in some embodiments, the first message may further include an identifier of a source terminal device.

It should be noted that the plurality of first terminal devices may be of different types or may be of a same type. The type of the first terminal device may include whether the first terminal device is a source terminal device or a relay terminal device.

In an example, after the target terminal device receives the first message, the target terminal device may not perform S402, but directly perform S403. In this case, the fourth terminal device in S403 is the first terminal device in S401, and a quantity of fourth terminal devices is equal to a quantity of the first terminal devices in S401.

In another example, to ensure reliability of unicast communication between the source terminal device and the target terminal device, the target terminal device may further perform S402 before performing S403.

S402: The target terminal device determines at least one second terminal devices in the plurality of first terminal devices.

The following describes S402 in detail by using a manner A to a manner G as examples.

Manner A: The target terminal device determines the at least one second terminal devices in the plurality of first terminal devices based on first information.

The first information indicates a direct path or an indirect path between the first terminal device and the target terminal device, and quality of transmission between the first terminal device and the target terminal device.

In an example, the quality of transmission between the first terminal device and the target terminal device may be obtained by the target terminal device through a currently transmitted first message.

A type of the quality of transmission between the first terminal device and the target terminal device is not limited in this embodiment of this application. For example, the quality of transmission between the first terminal device and the target terminal device may be an RSRP value obtained by the target terminal device by measuring RSRP of the first message. In addition, the transmission quality of the first relay device may alternatively be a SINR value, an RSRQ value, or an RSSI value of the first message.

In another example, the quality of transmission between the first terminal device and the target terminal device may be obtained by the target terminal device through historical information transmitted between the target terminal device and the first terminal device.

For example, if the first message carries only the identifier of the first terminal device and the identifier of the target terminal device, and does not carry an identifier of another terminal device (for example, an identifier of a relay device), it may be considered that there is the direct path between the first terminal device and the target terminal device. In other words, the first terminal device is the source terminal device. If the first message carries the identifier of the source terminal device in addition to the identifier of the first terminal device and the identifier of the target terminal device, it may be considered that there is the indirect path between the first terminal device and the target terminal device. In other words, the first terminal device is the relay device.

Specifically, that the target terminal device determines at least one second terminal devices in the plurality of first terminal devices based on first information includes the following steps.

S11: The target terminal device determines, based on the first information, whether a first terminal device that meets a third condition exists in the plurality of first terminal devices. The third condition includes that there is the direct path between the first terminal device and the target terminal device, and the quality of transmission between the first terminal device and the target terminal device is greater than or equal to a fifth threshold.

It should be understood that when there is the direct path between the first terminal device and the target terminal device, the first terminal device may be considered as the source terminal device described above. When there is the indirect path between the first terminal device and the target terminal device, the first terminal device may be considered as the first relay device described above.

When a first terminal device that meets the third condition exists in the plurality of first terminal devices, the first terminal device that meets the third condition is determined as the second terminal device.

Optionally, in an example, if a plurality of first terminal devices that all meet the third condition exist in the plurality of first terminal devices, the target terminal device may further select, from the plurality of first terminal devices that meet the third condition, a first terminal device whose quality of transmission with the target terminal device is highest, and use the first terminal device as the second terminal device. In this way, it can be ensured that quality of transmission between the second terminal device and the target terminal device can meet a corresponding requirement, and it can also be ensured that the quality of transmission between the second terminal device and the target terminal device in the plurality of first terminal devices is the best.

When no first terminal device that meets the third condition exists in the plurality of first terminal devices, the target terminal device performs S12.

S12: The target terminal device determines, based on fourth information, whether a first terminal device that meets a fifth condition exists in the plurality of first terminal devices. The fourth information includes the quality of transmission between the first terminal device and the target terminal device.

When a first terminal device that meets the fifth condition exists in the plurality of first terminal devices, the target terminal device determines the first terminal device that meets the fifth condition as the second terminal device.

If no first terminal device that meets the fifth condition exists in the plurality of first terminal devices, the target terminal device determines, as the second terminal device, a first terminal device that has the direct path to the target terminal device in the plurality of first terminal devices.

The following describes S12 in detail by using an example in which the fifth condition is a case 1 and an example in which the fifth condition is a case 2.

Case 1: The fifth condition includes that there is the indirect path between the first terminal device and the target terminal device, and the quality of transmission between the first terminal device and the target terminal device is greater than a sixth threshold. In this case, the sixth threshold is greater than the fifth threshold.

Optionally, in an example, if a plurality of first terminal devices that all meet the fifth condition exist in the plurality of first terminal devices, the target terminal device may further select, from the plurality of first terminal devices that meet the fifth condition, a first terminal device whose quality of transmission with the target terminal device is highest, and use the first terminal device as the second terminal device. In this way, it can be ensured that quality of transmission between the second terminal device and the target terminal device can meet a corresponding requirement, and it can also be ensured that the quality of transmission between the second terminal device and the target terminal device in the plurality of first terminal devices is the best.

Optionally, in another example, if a plurality of first terminal devices that all meet the fifth condition exist in the plurality of first terminal devices, the target terminal device may further select, from the plurality of first terminal devices that meet the fifth condition, a first terminal device whose highest quality of transmission with the target terminal device is less than or equal to a thirteenth threshold, and use the first terminal device as the second terminal device. In this way, it can be ensured that quality of transmission between the second terminal device and the target terminal device can meet a corresponding requirement, and can also avoid a case in which there is no gain because the second terminal device is excessively closed to the target terminal device.

Case 2: The fifth condition includes that there is the indirect path between the first terminal device and the target terminal device, and both the quality of transmission between the first terminal device and the target terminal device and quality of transmission between the first terminal device and the source terminal device are greater than a seventh threshold.

A manner in which the target terminal device obtains the quality of transmission between the first terminal device and the source terminal device is not limited in this application. For example, the quality of transmission between the first terminal device and the source terminal device may be predefined or preset (for example, specified in a protocol). For another example, the first terminal device may notify the target terminal device of the quality of transmission between the first terminal device and the source terminal device through the first message.

It should be noted that the quality of transmission between the first terminal device and the source terminal device is an RSRP value, a SINR value, an RSRQ value, or an RSSI value between the first terminal device and the source terminal device.

Optionally, in an example, if a plurality of first terminal devices that all meet the fifth condition exist in the plurality of first terminal devices, the target terminal device may further select, from the plurality of first terminal devices that meet the fifth condition, a first terminal device whose quality of transmission with the target terminal device is highest, and use the first terminal device as the second terminal device. In this way, it can be ensured that quality of transmission between the second terminal device and the target terminal device can meet a corresponding requirement, and it can also be ensured that the quality of transmission between the second terminal device and the target terminal device in the plurality of first terminal devices is the best.

In this example, the first terminal device whose quality of transmission with the target terminal device is highest may be understood as that both the quality of transmission between the first terminal device and the target terminal device and the quality of transmission between the first terminal device and the source terminal device are the highest. Alternatively, both an average value of the quality of transmission between the first terminal device and the target terminal device and an average value of the quality of transmission between the first terminal device and the source terminal device are largest.

It should be noted that, in the case 2, if the fifth condition includes that there is the indirect path between the first terminal device and the target terminal device, and both the quality of transmission between the first terminal device and the target terminal device and the quality of transmission between the first terminal device and the source terminal device are greater than the seventh threshold, that no first terminal device that meets the fifth condition exists in the plurality of first terminal devices may be understood as follows: the quality of transmission between each of the plurality of first terminal devices and the target terminal device is less than the seventh threshold, and/or the quality of transmission between each of the plurality of first terminal devices and the source terminal device is less than the seventh threshold.

In addition, in the case 2, that both the quality of transmission between the first terminal device and the target terminal device and quality of transmission between the first terminal device and the source terminal device are greater than a seventh threshold in the fifth condition may be replaced with: The quality of transmission between the first terminal device and the target terminal device is greater than or equal to a threshold 1, and the quality of transmission between the first terminal device and the source terminal device is greater than or equal to a threshold 2. In this case, that no first terminal device that meets the fifth condition exists in the plurality of first terminal devices may be understood as follows: The quality of transmission between each of the plurality of first terminal devices and the target terminal device is less than the threshold 1, and/or the quality of transmission between each of the plurality of first terminal devices and the source terminal device is less than the threshold 2.

In the manner A, first, the target terminal device preferentially selects a first terminal device that has the direct path to the target terminal device as the second terminal device, where transmission quality of the direct path meets a corresponding requirement. In this way, quality of transmission between the target terminal device and the second terminal device can be ensured. In addition, a delay of communication between the target terminal device and the second terminal device can be further reduced. This further ensures reliability of subsequent communication between the source terminal device and the second terminal device.

Second, the target terminal device selects a first terminal device from the indirect path as the second terminal device, where quality of transmission between the first terminal device and the target terminal device meets a corresponding requirement, or the quality of transmission between the first terminal device and the target terminal device and quality of transmission between the first terminal device and the source terminal device meet a corresponding requirement. In this way, the quality of transmission between the target terminal device and the second terminal device can be ensured, thereby ensuring reliability of subsequent communication between the source terminal device and the target terminal device via the second terminal device.

Finally, if the target terminal device still does not select, from the plurality of first terminal devices, a second terminal device that meets a corresponding requirement, the target terminal device may directly determine the first terminal device that has the direct path to the target terminal device as the second terminal device. In this way, a delay of communication between the target terminal device and the second terminal device can be reduced.

Manner B: The target terminal device determines the at least one second terminal devices in the plurality of first terminal devices based on second information.

The second information indicates whether a unicast connection is established between the first terminal device and the target terminal device.

Specifically, that the target terminal device determines a plurality of second terminal devices in the plurality of first terminal devices based on the second information includes: The target terminal device determines, as the second terminal devices, first terminal devices that have established the unicast connections to the target terminal device in the plurality of first terminal devices. In other words, the target terminal device preferentially considers the first terminal device that establishes the unicast connection to the target terminal device. Then, the existing unicast connection between the second terminal device and the target terminal device can be multiplexed, thereby reducing time for establishing a link between the second terminal device and the target terminal device, to reduce time for establishing a link between the source terminal device and the target terminal device.

Optionally, in an example, if a plurality of first terminal devices that establish the unicast connections to the target terminal device exist in the plurality of first terminal devices, the target terminal device may further consider another factor in addition to the second information, to further select the second terminal device.

For example, the another factor may include the quality of transmission between the first terminal device and the target terminal device.

Specifically, the target terminal device may determine, as the second terminal device, a first terminal device that has established a unicast connection to the target terminal device in the plurality of first terminal devices and whose quality of transmission with the target terminal device is greater than or equal to an eighth threshold.

It should be noted that, when the quality of transmission between the first terminal device and the target terminal device is an RSRP value between the first terminal device and the target terminal device, because the unicast connection is established between the first terminal device and the target terminal device, the RSRP value between the first terminal device and the target terminal device may be referred to as a sidelink reference signal received power (sidelink reference signal received power, SL-RSRP) value.

Manner C: The target terminal device determines the at least one second terminal devices in the plurality of first terminal devices based on first information and second information.

For related descriptions of the first information, refer to the related descriptions in the manner A. Details are not described herein again.

For related descriptions of the second information, refer to the related descriptions in the manner B. Details are not described herein again.

Specifically, as shown in FIG. 6, that the target terminal device determines a plurality of second terminal devices in the plurality of first terminal devices based on the first information and the second information includes the following steps.

S21: The target terminal device determines, based on the first information, whether a first terminal device that meets a third condition exists in the plurality of first terminal devices.

For related descriptions of the third condition, refer to the related descriptions in the manner A. Details are not described herein again.

When a first terminal device that meets the third condition exists in the plurality of first terminal devices, the first terminal device that meets the third condition is determined as the second terminal device.

Optionally, in an example, if a plurality of first terminal devices that all meet the third condition exist in the plurality of first terminal devices, the target terminal device may further select, from the plurality of first terminal devices that meet the third condition, a first terminal device whose quality of transmission with the target terminal device is less than or equal to a twelfth threshold, and use the first terminal device as the second terminal device. In this way, it can be ensured that the quality of transmission between the first terminal device and the target terminal device can meet a corresponding requirement, and can also avoid a case in which there is no gain because the first terminal device is excessively closed to the target terminal device.

When no first terminal device that meets the third condition exists in the plurality of first terminal devices, in an example, the target terminal device performs S22. In another example, the target terminal device may perform S23. In other words, in this case, the target terminal device does not need to perform S22.

S22: The target terminal device determines, based on the second information, whether a first terminal device that meets a fourth condition exists in the plurality of first terminal devices. The fourth condition includes that a unicast connection is established between the first terminal device and the target terminal device.

When a first terminal device that meets the fourth condition exists in the plurality of first terminal devices, the target terminal device determines the first terminal device that meets the fourth condition as the second terminal device.

When no first terminal device that meets the fourth condition exists in the plurality of first terminal devices, the target terminal device performs S23.

S23: The target terminal device determines the second terminal devices in the plurality of first terminal devices based on fourth information.

Specifically, the target terminal device determines, based on the fourth information, whether a first terminal device that meets a fifth condition exists in the plurality of first terminal devices.

When a first terminal device that meets the fifth condition exists in the plurality of first terminal devices, the target terminal device determines the first terminal device that meets the fifth condition as the second terminal device.

When no first terminal device that meets the fifth condition exists in the plurality of first terminal devices, the target terminal device performs S24.

For a solution in which the target terminal device determines, based on the fourth information, whether a first terminal device that meets a fifth condition exists in the plurality of first terminal devices in S23, refer to the related descriptions in S12. Details are not described herein again.

It should be noted that, in S23, when the quality of transmission between the first terminal device in the fifth condition and the target terminal device is an RSRP value between the first terminal device and the target terminal device, because no unicast connection is established between the first terminal device and the target terminal device, the RSRP value between the first terminal device and the target terminal device may be referred to as a sidelink discovery reference signal received power (sidelink discovery reference signal received power, SD-RSRP) value.

Optionally, in an example, based on S23, if a plurality of second terminal devices are determined, the target terminal device may further determine a third terminal device in the plurality of second terminal devices, and use the third terminal device as a final second terminal device.

In an example, the third terminal device is a terminal device whose quality of transmission with the target terminal device is highest in the plurality of second terminal devices. In other words, the target terminal device uses, as the final second terminal device, a terminal device whose quality of transmission with the target terminal device is highest in the plurality of second terminal devices.

In another example, the third terminal device is a terminal device whose quality of transmission with the target terminal device and quality of transmission with the source terminal device are both highest in the plurality of second terminal devices. In other words, the target terminal device uses, as the final second terminal device, a terminal device whose quality of transmission with the target terminal device and quality of transmission with the source terminal device are both highest in the plurality of second terminal devices.

S24: The target terminal device determines, as a second terminal device, a first terminal device that has the direct path to the target terminal device in the plurality of first terminal devices.

It may be learned from S21 to S24 that the target terminal device preferentially selects a first terminal device that has the direct path to the target terminal device as the second terminal device, where transmission quality of the direct path meets a corresponding requirement. In this way, quality of transmission between the target terminal device and the second terminal device can be ensured. In addition, a delay of communication between the target terminal device and the second terminal device can be further reduced. This further ensures reliability of subsequent communication between the source terminal device and the target terminal device via the second terminal device.

Then, the target terminal device selects the first terminal device that establishes the unicast connection to the target terminal device as the second terminal device. In this way, the existing unicast connection between the second terminal device and the target terminal device can be multiplexed, thereby reducing time for establishing a link between the second terminal device and the target terminal device, to reduce time for establishing a link between the source terminal device and the target terminal device.

The target terminal device selects a first terminal device from the indirect path as the second terminal device, where quality of transmission between the first terminal device and the target terminal device meets a corresponding requirement, or the quality of transmission between the first terminal device and the target terminal device and quality of transmission between the first terminal device and the source terminal device meet a corresponding requirement. In this way, the quality of transmission between the target terminal device and the second terminal device can be ensured, thereby ensuring reliability of subsequent communication between the source terminal device and the second terminal device.

If the target terminal device still does not select, from the plurality of first terminal devices, a second terminal device that meets a corresponding requirement, the target terminal device may directly determine the first terminal device that has the direct path to the target terminal device as the second terminal device. In this way, a delay of communication between the target terminal device and the second terminal device can be reduced.

In conclusion, based on S21 to S24, priorities of selecting the second terminal device by the target terminal device from the plurality of first terminal devices in descending order are as follows: the direct path and the transmission quality of the direct path, the established unicast connection, and the indirect path and the transmission quality of the indirect path.

It may be learned from S21, S23, and S24 that the target terminal device preferentially selects a first terminal device that has the direct path to the target terminal device as the second terminal device, where transmission quality of the direct path meets a corresponding requirement. In this way, quality of transmission between the target terminal device and the second terminal device can be ensured. In addition, a delay of communication between the target terminal device and the second terminal device can be further reduced. This further ensures reliability of subsequent communication between the source terminal device and the target terminal device via the second terminal device.

The target terminal device selects a first terminal device from the indirect path as the second terminal device, where quality of transmission between the first terminal device and the target terminal device meets a corresponding requirement, or the quality of transmission between the first terminal device and the target terminal device and quality of transmission between the first terminal device and the source terminal device meet a corresponding requirement. In this way, the quality of transmission between the target terminal device and the second terminal device can be ensured, thereby ensuring reliability of subsequent communication between the source terminal device and the second terminal device.

If the target terminal device still does not select, from the plurality of first terminal devices, a second terminal device that meets a corresponding requirement, the target terminal device may directly determine the first terminal device that has the direct path to the target terminal device as the second terminal device. In this way, a delay of communication between the target terminal device and the second terminal device can be reduced.

Based on S21, S23, and S24, priorities of selecting the second terminal device by the target terminal device from the plurality of first terminal devices in descending order are as follows: the direct path and the transmission quality of the direct path, and the indirect path and the transmission quality of the indirect path.

Manner D: The target terminal device determines the at least one second terminal devices in the plurality of first terminal devices based on third information. The third information indicates a first QoS requirement of the source terminal device on the source terminal device and the target terminal device.

Specifically, the target terminal device determines a first terminal device that meets the first QoS requirement in the plurality of first terminal devices as the second terminal device.

A manner in which the target terminal device obtains the first QoS requirement is not limited in this application.

In an example, the first QoS requirement may be predefined or preset. For example, the first QoS requirement may be specified in a communication protocol.

In another example, the first QoS requirement may be notified by the first terminal device to the target terminal device. For example, the first terminal device may include the first QoS requirement in the first message. Then, the target terminal device may learn of the first QoS requirement.

Manner E: The target terminal device determines the second terminal devices in the plurality of first terminal devices based on first information and third information.

Specifically, the target terminal device determines, as the second terminal device based on the first information and the third information, a first terminal device that meets both the third condition and the first QoS requirement in the plurality of first terminal devices.

It should be noted that an execution sequence of whether the target terminal device first selects, from the plurality of first terminal devices, the first terminal device that meets the third condition, or first selects, from the plurality of first terminal devices, the first terminal device that meets the first QoS requirement is not limited in this application.

In an example, the target terminal device may first select, from the plurality of first terminal devices, the first terminal device that meets the third condition, and select, from the first terminal device that meets the third condition, a second terminal device.

In another example, the target terminal device may first select, from the plurality of first terminal devices, the first terminal device that meets the first QoS requirement, and select, from the first terminal device that meets the third condition, a second terminal device.

For a solution about how to select, from the plurality of first terminal devices, the first terminal device that meets the third condition, refer to the related descriptions in the manner A. For a solution about how to select, from the plurality of first terminal devices, the first terminal device that meets the first QoS requirement, refer to the related descriptions in the manner D.

Manner F: The target terminal device determines the second terminal devices in the plurality of first terminal devices based on second information and third information.

Specifically, the target terminal device determines, as the second terminal device based on the second information and the third information, a first terminal device that has established a unicast connection to the target terminal device and that meets the first QoS requirement in the plurality of first terminal devices.

It should be noted that an execution sequence of whether the target terminal device first selects, from the plurality of first terminal devices, the first terminal device that has established the unicast connection to the target terminal device, or first selects, from the plurality of first terminal devices, the first terminal device that meets the first QoS requirement is not limited in this application.

For a solution about how to select, from the plurality of first terminal devices, the first terminal device that has established the unicast connection to the target terminal device, refer to the related descriptions in the manner B. For a solution about how to select, from the plurality of first terminal devices, the first terminal device that meets the first QoS requirement, refer to the related descriptions in the manner D.

Manner G: The target terminal device determines the second terminal devices in the plurality of first terminal devices based on first information, second information, and third information.

Specifically, the target terminal device determines, as the second terminal device based on the first information, the second information and the third information, a first terminal device that has established a unicast connection to the target terminal device and that meets both the third condition and the first QoS requirement in the plurality of first terminal devices.

It should be noted that an execution sequence of whether the target terminal device first selects, from the plurality of first terminal devices, the first terminal device that meets the third condition, or first selects, from the plurality of first terminal devices, the first terminal device that has established the unicast connection to the target terminal device, or first selects, from the plurality of first terminal devices, the first terminal device that meets the first QoS requirement is not limited in this application.

For a solution about how to select, from the plurality of first terminal devices, the first terminal device that meets the third condition, refer to the related descriptions in the manner A. For a solution about how to select, from the plurality of first terminal devices, the first terminal device that has established the unicast connection to the target terminal device, refer to the related descriptions in the manner B. For a solution about how to select, from the plurality of first terminal devices, the first terminal device that meets the first QoS requirement, refer to the related descriptions in the manner D.

S403: The target terminal device sends a second message to the at least one second terminal device.

The second message indicates that the target terminal device is discovered, and the second message includes the identifier of the target terminal device.

Optionally, the target terminal device may further send, to a first terminal device other than the at least one second terminal device in the plurality of first terminal devices, a message used to refuse to discover the target terminal device, or the target terminal device may not reply to the message (for example, does not perform any operation).

Whether the target terminal device in the foregoing descriptions of the method 400 supports the UE-to-UE relay technology, in other words, whether the target terminal device is a legacy device (legacy UE), is not limited in this embodiment of this application.

Optionally, in an embodiment in which the target terminal device does not support the UE-to-UE relay technology, in other words, the target terminal device is a legacy device (legacy UE). To prevent an error from occurring in a process in which the source terminal device exchanges information with the target terminal device through a subsequently established unicast connection, the target terminal device first performs S404 after performing S401, and determines, based on a determining result in S404, whether to perform S403 (the method 400 described above includes only S401 and S403, but does not include S402) or whether to perform S402 and S403 (the method 400 described above includes S401 to S403). S404 is described in detail below.

S404: The target terminal device determines, based on each first message, whether to accept the first message.

In an example, when the target terminal device finds that a parameter carried in the first message includes an unknown, parameter the target terminal device determines not to accept the first message. Alternatively, when the target terminal device finds that all parameters carried in the first message are known parameters, the target terminal device determines to accept the first message.

For example, an RSC included in the first message is an RSC of R18 or later, or the first message carries a parameter newly added in R18 or a later version. In this case, it may be considered that the parameter carried in the first message includes a parameter that is not known by the target terminal device.

In another example, when the target terminal device finds that the first message is forwarded by the relay device, in other words, the first terminal device is the relay device, the target terminal device determines not to accept the first message. Alternatively, when the target terminal device finds that the first message is not forwarded by the relay device, but is directly sent by the source terminal device, in other words, the first terminal device is the source terminal device, the target terminal device determines to accept the first message.

For example, if the target terminal device finds that in addition to the identifier of the first terminal device and the identifier of the target terminal device, the first message further carries an identifier of another terminal device (for example, the identifier of the source terminal device), the target terminal device may consider that the first message is forwarded by the relay device (namely, the first terminal device).

If the target terminal device finds that the first message carries the identifier of the first terminal device and the identifier of the target terminal device and carries no identifier of another terminal device, the target terminal device may consider that the first message is not forwarded by the relay device, but is directly sent by the source terminal device (namely, the first terminal device).

Optionally, when the target terminal device determines not to accept the first message, the target terminal device may further send, to the first terminal device that sends the first message, the message used to refuse to discover the target terminal device; or the target terminal device ignores/does not reply to the first terminal device that sends the first message (for example, does not perform any operation). Optionally, if the target terminal device determines to accept the first message, in the foregoing embodiment in which the method 400 includes only S401 and S403 and does not include S402, the target terminal device may directly perform S403. In this case, the fourth terminal device in S403 is the first terminal device that sends the first message.

Optionally, if the target terminal device determines to accept the first message, in the foregoing embodiment in which the method 400 includes S401 to S403, the target terminal device may directly perform S402. In this case, the first terminal device in S402 is the first terminal device that sends the first message.

It should be noted that, if the target terminal device is of R18 or later, it may be considered that the target terminal device supports the UE-to-UE relay technology. It should be noted that, if the target terminal device is of R17 or earlier, it may be considered that the target terminal device does not support the UE-to-UE relay technology.

A source terminal device may also usually receive a plurality of response messages. For example, the source terminal device directly receives a request message sent by a target terminal device and/or receives, via a relay terminal device, a request response sent by the target terminal device. In this case, to ensure reliability of unicast communication between the source terminal device and the target terminal device, the source terminal device in embodiments of this application may select at least one sending entity from sending entities that send the plurality of response messages, and establish a unicast connection to the sending entity, to implement a process of communication between the source terminal device and the target terminal device.

Whether the plurality of response messages are directly sent by the target terminal device to the source terminal device or sent by the target terminal device to the source terminal device via the relay device is not limited in embodiments of this application.

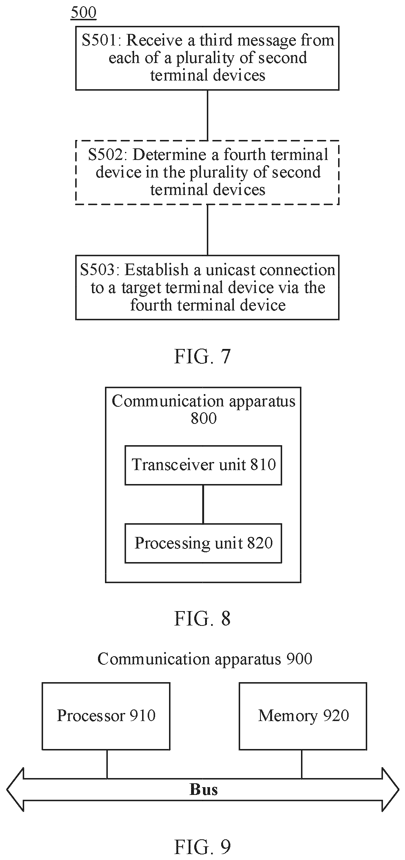

With reference to FIG. 7, the following describes, by using an example in which the source terminal device receives the third message sent by the plurality of second terminal devices, how the source terminal device selects the at least one sending entity from the sending entities that send the plurality of request messages.

FIG. 7 is a schematic flowchart of a communication method 500 according to an embodiment of this application.

For example, as shown in FIG. 7, the communication method 500 includes S501 to S503. The following describes S501 to S503 in detail.

S501: A source terminal device receives a third message from each of a plurality of second terminal devices.

The third message indicates that a target terminal device is discovered. The third message includes an identifier of the second terminal device, or the third message includes the identifier of the second terminal device and an identifier of the target terminal device.

Optionally, in some embodiments, the third message may further include an identifier of the source terminal device.

S502: The source terminal device determines a fourth terminal device in the plurality of second terminal devices.

The following describes S502 in detail by using a manner A' to a manner C' as examples.

Manner A': The source terminal device determines the fourth terminal device in the plurality of first terminal devices based on sixth information.

The sixth information indicates a direct path or an indirect path between the second terminal device and the source terminal device, and quality of transmission between the second terminal device and the source terminal device.

In an example, the quality of transmission between the second terminal device and the source terminal device may be obtained by the source terminal device through a currently transmitted third message.

A type of the quality of transmission between the second terminal device and the source terminal device is not limited in this embodiment of this application. For example, the quality of transmission between the second terminal device and the source terminal device may be an RSRP value obtained by the source terminal device by measuring RSRP of the third message. In addition, the second terminal device and the source terminal device may alternatively be a SINR value, an RSRQ value, or an RSSI value of the third message.

In another example, the quality of transmission between the second terminal device and the source terminal device may be obtained by the source terminal device through historical information transmitted between the source terminal device and the second terminal device.

For example, if the third message carries only the identifier of the second terminal device or carries only the identifier of the second terminal device and the identifier of the source terminal device, and does not carry an identifier of another terminal device, it may be considered that there is the direct path between the second terminal device and the source terminal device. In other words, the second terminal device is the target terminal device. If the third message further carries the identifier of the target terminal device in addition to the identifier of the second terminal device or in addition to the identifier of the second terminal device and the identifier of the source terminal device, it may be considered that there is the indirect path between the second terminal device and the source terminal device. In other words, the second terminal device is a relay device.

Specifically, that the target terminal device determines the fourth terminal device in the plurality of first terminal devices based on sixth information includes the following steps.

S11': The source terminal device determines, based on the sixth information, whether a fourth terminal device that meets a sixth condition exists in the plurality of second terminal devices. The sixth condition includes that there is the direct path between the second terminal device and the source terminal device, and the quality of transmission between the second terminal device and the source terminal device is greater than or equal to a ninth threshold.

When a second terminal device that meets the sixth condition exists in the plurality of second terminal devices, the source terminal device determines the second terminal device that meets the sixth condition as the fourth terminal device.

Optionally, in an example, if a plurality of second terminal devices that all meet the sixth condition exist in the plurality of second terminal devices, the source terminal device may further select, from the plurality of second terminal devices that meet the sixth condition, a second terminal device whose quality of transmission with the source terminal device is highest, and use the second terminal device as the fourth terminal device. In this way, it can be ensured that the quality of transmission between the fourth terminal device and the source terminal device can meet a corresponding requirement, and it can also be ensured that the quality of transmission between the fourth terminal device and the source terminal device in the plurality of second terminal devices is best.

When no second terminal device that meets the sixth condition exists in the plurality of second terminal devices, the source terminal device performs S12'.

S12': The source terminal device determines the fourth terminal device in the plurality of second terminal devices based on eighth information.

Specifically, the source terminal device determines, based on the eighth information, whether the fourth terminal device that meets an eighth condition exists in the plurality of second terminal devices.

When the second terminal device that meets the eighth condition exists in the plurality of second terminal devices, the source terminal device determines the second terminal device that meets the eighth condition as the fourth terminal device.

If no second terminal device that meets the eighth condition exists in the plurality of second terminal devices, the source terminal device determines, as the fourth terminal device, a second terminal device that has the direct path to the source terminal device in the plurality of second terminal devices.

The following describes S 12' in detail by using an example in which the eighth information and the eighth condition are a case 1' and an example in which the eighth information and the eighth condition are a case 2'.

Case 1': The eighth information includes the quality of transmission between the second terminal device and the source terminal device. The eighth condition includes that there is the indirect path between the second terminal device and the source terminal device, and the quality of transmission between the second terminal device and the source terminal device is greater than or equal to a tenth threshold. The tenth threshold is greater than the ninth threshold.

Optionally, in an example, if a plurality of second terminal devices that all meet the sixth condition exist in the plurality of second terminal devices, the source terminal device may further select, from the plurality of second terminal devices that meet the sixth condition, a second terminal device whose quality of transmission with the source terminal device is highest, and use the second terminal device as the fourth terminal device. In this way, it can be ensured that the quality of transmission between the fourth terminal device and the source terminal device can meet a corresponding requirement, and it can also be ensured that the quality of transmission between the fourth terminal device and the source terminal device in the plurality of second terminal devices is best.

Optionally, in another example, if a plurality of second terminal devices that all meet the sixth condition exist in the plurality of second terminal devices, the source terminal device may further select, from the plurality of second terminal devices that meet the sixth condition, a second terminal device whose quality of transmission with the source terminal device is less than or equal to a fifteenth threshold, and use the second terminal device as the fourth terminal device. In this way, it can be ensured that the quality of transmission between the fourth terminal device and the source terminal device can meet a corresponding requirement, and can also avoid a case in which there is no gain because the fourth terminal device is excessively closed to the source terminal device.

Case 2': The eighth information includes quality of transmission between the second terminal device and the target terminal device and the quality of transmission between the second terminal device and the source terminal device. The eighth condition includes that there is the indirect path between the second terminal device and the source terminal device, and both the quality of transmission between the second terminal device and the target terminal device and the quality of transmission between the second terminal device and the source terminal device are greater than an eleventh threshold.

A manner in which the source terminal device obtains the quality of transmission between the second terminal device and the target terminal device is not limited in this application. For example, the quality of transmission between the second terminal device and the target terminal device may be predefined or preset (for example, specified in a protocol). For another example, the second terminal device may notify the source terminal device of the quality of transmission between the second terminal device and the target terminal device through the third message.

It should be noted that the quality of transmission between the second terminal device and the target terminal device is an RSRP value, a SINR value, an RSRQ value, or an RSSI value between the second terminal device and the target terminal device.

Optionally, in an example, if a plurality of second terminal devices that all meet the eighth condition exist in the plurality of second terminal devices, the source terminal device may further select, from the plurality of second terminal devices that meet the eighth condition, a second terminal device whose quality of transmission with the source terminal device is highest, and use the second terminal device as the fourth terminal device. In this way, it can be ensured that the quality of transmission between the fourth terminal device and the source terminal device can meet a corresponding requirement, and it can also be ensured that the quality of transmission between the fourth terminal device and the source terminal device in the plurality of second terminal devices is best.

In this example, the second terminal device whose quality of transmission with the source terminal device is highest may be understood as that both the quality of transmission between the second terminal device and the target terminal device and the quality of transmission between the second terminal device and the source terminal device are highest. Alternatively, both an average value of the quality of transmission between the second terminal device and the target terminal device and an average value of the quality of transmission between the second terminal device and the source terminal device are largest.

It should be noted that, in the case 2', if the eighth condition includes that there is the indirect path between the second terminal device and the source terminal device, and both the quality of transmission between the second terminal device and the target terminal device and the quality of transmission between the second terminal device and the source terminal device are greater than the eleventh threshold, that no second terminal device that meets the eighth condition exists in the plurality of second terminal devices may be understood as follows: the quality of transmission between each of the plurality of second terminal devices and the target terminal device is less than the eleventh threshold, and/or the quality of transmission between each of the plurality of second terminal devices and the source terminal device is less than the eleventh threshold.

In addition, in the case 2', that both the quality of transmission between the second terminal device and the target terminal device and the quality of transmission between the second terminal device and the source terminal device are greater than an eleventh threshold in the eighth condition may be replaced with: The quality of transmission between the second terminal device and the target terminal device is greater than or equal to a threshold 3, and the quality of transmission between the second terminal device and the source terminal device is greater than or equal to a threshold 4. In this case, that no second terminal device that meets the eighth condition exists in the plurality of second terminal devices may be understood as follows: The quality of transmission between each of the plurality of second terminal devices and the target terminal device is less than the threshold 3, and/or the quality of transmission between each of the plurality of second terminal devices and the source terminal device is less than the threshold 4.

In the foregoing manner A', first, the source terminal device preferentially selects a second terminal device that has the direct path to the source terminal device as the fourth terminal device, where transmission quality of the direct path meets a corresponding requirement. **In** this way, the quality of transmission between the source terminal device and the fourth terminal device can be ensured. In addition, a delay of communication between the source terminal device and the fourth terminal device can be further reduced. This further ensures reliability of subsequent communication between the source terminal device and the fourth terminal device.

Second, the source terminal device selects a second terminal device from the indirect path as the fourth terminal device, where the quality of transmission between the second terminal device and the source terminal device meets a corresponding requirement, or the quality of transmission between the second terminal device and the source terminal device and the quality of transmission between the second terminal device and the target terminal device meet a corresponding requirement. In this way, the quality of transmission between the source terminal device and the fourth terminal device can be ensured, thereby ensuring reliability of subsequent communication between the source terminal device and the source terminal device via the fourth terminal device.

Finally, if the source terminal device still does not select, from the plurality of second terminal devices, the fourth terminal device that meets a corresponding requirement, the source terminal device may directly determine a second terminal device that has the direct path to the source terminal device as the fourth terminal device. In this way, a delay of communication between the source terminal device and the fourth terminal device can be reduced.

Manner B': The source terminal device determines the fourth terminal device in the plurality of second terminal devices based on seventh information.

The seventh information indicates whether a unicast connection is established between the second terminal device and the source terminal device.

Specifically, that the source terminal device determines the fourth terminal device in the plurality of second terminal devices based on seventh information includes: The source terminal device determines, based on the seventh information, whether a second terminal device that meets a seventh condition exists in the plurality of second terminal devices. The seventh condition includes that the unicast connection is established between the second terminal device and the source terminal device. In other words, the source terminal device preferentially considers the second terminal device that establishes the unicast connection to the source terminal device. Then, the existing unicast connection between the fourth terminal device and the source terminal device can be multiplexed, thereby reducing time for establishing a link between the fourth terminal device and the target terminal device, to reduce time for establishing a link between the source terminal device and the target terminal device.

Optionally, in an example, if a plurality of second terminal devices that establish the unicast connections to the source terminal device exist in the plurality of second terminal devices, the source terminal device may further consider another factor in addition to the seventh information, to further select the fourth terminal device.

For example, the another factor may include the quality of transmission between the second terminal device and the source terminal device.

Specifically, the source terminal device may determine, as the fourth terminal device, a second terminal device that has established a unicast connection to the source terminal device in the plurality of second terminal devices and whose quality of transmission with the source terminal device is greater than or equal to a twelfth threshold.

It should be noted that, when the quality of transmission between the second terminal device and the source terminal device is the RSRP value between the second terminal device and the source terminal device, because the unicast connection is established between the second terminal device and the source terminal device, the RSRP value between the second terminal device and the source terminal device may be referred to as an SL-RSRP value.

Manner C': The source terminal device determines the fourth terminal device in the plurality of second terminal devices based on sixth information and seventh information.

For related descriptions of the sixth information, refer to the related descriptions in the manner A'. Details are not described herein again.

For related descriptions of the seventh information, refer to the related descriptions in the manner B'. Details are not described herein again.

Specifically, as shown in FIG. 7, that the source terminal device determines the fourth terminal device in the plurality of second terminal devices based on sixth information and seventh information includes the following steps.

S21': The source terminal device determines, based on the sixth information, whether a fourth terminal device that meets a sixth condition exists in the plurality of second terminal devices.

For related descriptions of the sixth condition, refer to the related descriptions in the manner A'. Details are not described herein again.

When a second terminal device that meets the sixth condition exists in the plurality of second terminal devices, the source terminal device determines the second terminal device that meets the sixth condition as the fourth terminal device.

Optionally, in an example, if a plurality of second terminal devices that all meet the sixth condition exist in the plurality of second terminal devices, the source terminal device may further select, from the plurality of first terminal devices that meet the sixth condition, a second terminal device whose quality of transmission with the source terminal device is less than or equal to a fourteenth threshold, and use the second terminal device as the fourth terminal device. **In** this way, it can be ensured that the quality of transmission between the fourth terminal device and the source terminal device can meet a corresponding requirement, and can also avoid a case in which there is no gain because the fourth terminal device is excessively closed to the source terminal device.

When no second terminal device that meets the sixth condition exists in the plurality of second terminal devices, in an example, the source terminal device performs S22'. In another example, the source terminal device may perform S23'. In other words, in this case, the source terminal device does not need to perform S22'.

S22': The source terminal device determines, based on the seventh information, whether a second terminal device that meets a seventh condition exists in the plurality of second terminal devices.

For related descriptions of the seventh condition, refer to the related descriptions in the manner B'. Details are not described herein again.

When a second terminal device that meets the seventh condition exists in the plurality of second terminal devices, the source terminal device determines the second terminal device that meets the seventh condition as the fourth terminal device.

When no second terminal device that meets the seventh condition exists in the plurality of second terminal devices, the source terminal device performs S23'.

S23': The source terminal device determines the fourth terminal device in the plurality of second terminal devices based on eighth information.

Specifically, the source terminal device determines, based on the eighth information, whether a second terminal device that meets an eighth condition exists in the plurality of first terminal devices.

When a second terminal device that meets the eighth condition exists in the plurality of second terminal devices, the source terminal device determines the second terminal device that meets the eighth condition as the fourth terminal device.

When no second terminal device that meets the eighth condition exists in the plurality of second terminal devices, the source terminal device performs S24'.

For a solution in which the source terminal device determines, based on eighth information, whether a second terminal device that meets an eighth condition exists in the plurality of second terminal devices in S23', refer to the related descriptions in S12'. Details are not described herein again.

It should be noted that, in S23', when the quality of transmission between the second terminal device and the source terminal device in the eighth condition is the RSRP value between the second terminal device and the source terminal device, because no unicast connection is established between the second terminal device and the source terminal device, the RSRP value between the second terminal device and the source terminal device may be referred to as an SD-RSRP value.

Optionally, in an example, based on S23', if a plurality of fourth terminal devices are determined, the source terminal device may further determine a fifth terminal device in the plurality of fourth terminal devices, and use the fifth terminal device as a final fourth terminal device.

In an example, the fifth terminal device is a terminal device whose quality of transmission with the target terminal device is highest in the plurality of fourth terminal devices. In other words, the source terminal device uses, as the final fourth terminal device, the terminal device whose quality of transmission with the source terminal device is highest in the plurality of fourth terminal devices.

In another example, the fifth terminal device is a terminal device whose quality of transmission with the target terminal device and quality of transmission with the source terminal device are both highest in the plurality of fourth terminal devices. In other words, the source terminal device uses, as the final fourth terminal device, the terminal device whose quality of transmission with the source terminal device and quality of transmission with the target terminal device are both highest in the plurality of fourth terminal devices.

S24': The source terminal device determines, as the fourth terminal device, a second terminal device that has the direct path to the source terminal device in the plurality of second terminal devices.

It may be learned from S21' to S24' that the source terminal device preferentially selects a second terminal device that has the direct path to the source terminal device as the fourth terminal device, where transmission quality of the direct path meets a corresponding requirement. In this way, the quality of transmission between the source terminal device and the fourth terminal device can be ensured. In addition, a delay of communication between the source terminal device and the fourth terminal device can be further reduced. This further ensures reliability of subsequent communication between the source terminal device and the fourth terminal device.

Then, the source terminal device selects a second terminal device that establishes the unicast connection to the source terminal device as the fourth terminal device. In this way, the existing unicast connection between the fourth terminal device and the source terminal device can be multiplexed, thereby reducing time for establishing a link between the fourth terminal device and the source terminal device, to reduce time for establishing a link between the source terminal device and the target terminal device.

The source terminal device selects a second terminal device from the indirect path as the fourth terminal device, where the quality of transmission between the second terminal device and the source terminal device meets a corresponding requirement, or the quality of transmission between the second terminal device and the source terminal device and the quality of transmission between the second terminal device and the source terminal device meet a corresponding requirement. In this way, the quality of transmission between the source terminal device and the fourth terminal device can be ensured, thereby ensuring reliability of subsequent communication between the source terminal device and the source terminal device via the fourth terminal device.

If the source terminal device still does not select, from the plurality of second terminal devices, the fourth terminal device that meets a corresponding requirement, the source terminal device may directly determine a second terminal device that has the direct path to the source terminal device as the fourth terminal device. In this way, a delay of communication between the source terminal device and the fourth terminal device can be reduced.

In conclusion, based on S21' to S24', priorities of selecting the fourth terminal device by the source terminal device from the plurality of second terminal devices in descending order are as follows: the direct path and the transmission quality of the direct path, the established unicast connection, and the indirect path and the transmission quality of the indirect path.

It may be learned from S21', S23, and S24' that the source terminal device preferentially selects the second terminal device that has the direct path to the source terminal device as the fourth terminal device, where the transmission quality of the direct path meets a corresponding requirement. In this way, the quality of transmission between the source terminal device and the fourth terminal device can be ensured. In addition, a delay of communication between the source terminal device and the fourth terminal device can be further reduced. This further ensures reliability of subsequent communication between the source terminal device and the fourth terminal device.

The source terminal device selects the second terminal device from the indirect path as the fourth terminal device, where the quality of transmission between the second terminal device and the source terminal device meets a corresponding requirement, or the quality of transmission between the second terminal device and the source terminal device and the quality of transmission between the second terminal device and the source terminal device meet a corresponding requirement. In this way, the quality of transmission between the source terminal device and the fourth terminal device can be ensured, thereby ensuring reliability of subsequent communication between the source terminal device and the source terminal device via the fourth terminal device.

If the source terminal device still does not select, from the plurality of second terminal devices, the fourth terminal device that meets a corresponding requirement, the source terminal device may directly determine the second terminal device that has the direct path to the source terminal device as the fourth terminal device. In this way, a delay of communication between the source terminal device and the fourth terminal device can be reduced.

Based on S21', S23', and S24', priorities of selecting the fourth terminal device by the target terminal device from the plurality of second terminal devices in descending order are as follows: the direct path and the transmission quality of the direct path, and the indirect path and the transmission quality of the indirect path.

S503: The source terminal device establishes a unicast connection to the target terminal device via the fourth terminal device.

Optionally, in some embodiments, if there is one fourth terminal device, there is a direct path between the fourth terminal device and the source terminal device, and no unicast connection is established between the fourth terminal device and the source terminal device, the source terminal device directly establishes a unicast connection to the second terminal device. In this embodiment, the fourth terminal device may be considered as a target terminal device.

Optionally, in some embodiments, if there is one fourth terminal device, there is an indirect path between the fourth terminal device and the source terminal device, and no unicast connection is established between the fourth terminal device and the source terminal device, the source terminal device first establishes a unicast connection to the fourth terminal device. Then, the fourth terminal device establishes a unicast connection to the target terminal device. Further, the source terminal device communicates with the target terminal device via the second terminal device. In this embodiment, the fourth terminal device may be considered as the first relay device described above.

Optionally, in still some embodiments, if there is one fourth terminal device, there is a direct path between the fourth terminal device and the source terminal device, and a unicast connection is established between the fourth terminal device and the source terminal device, the fourth terminal device does not need to establish a unicast connection to the source terminal device and may directly communicate with the source terminal device. In this embodiment, the fourth terminal device may be considered as a target terminal device.

Optionally, in still some embodiments, if there is one fourth terminal device, there is an indirect path between the fourth terminal device and the source terminal device, and a unicast connection is established between the fourth terminal device and the source terminal device, the fourth terminal device does not need to establish a unicast connection to the source terminal device, and the fourth terminal device directly establishes a unicast connection to the target terminal device. In this way, the source terminal device communicates with the target terminal device via the fourth terminal device. In this embodiment, the fourth terminal device may be considered as the first relay device described above.

It should be noted that at least two of the method 300, the method 400, and the method 500 described above may be implemented in combination, or may be implemented separately. This is not limited in embodiments of this application.

A communication apparatus provided in embodiments of this application is described in detail below with reference to FIG. 8 and FIG. 9.

FIG. 8 is a diagram of a structure of a communication apparatus 800 according to an embodiment of this application.

For example, as shown in FIG. 8, the communication apparatus 800 includes a transceiver unit 810 and a processing unit 820.

The transceiver unit 810 may communicate with the outside. The transceiver unit 810 may also be referred to as a communication interface or a communication unit. The processing unit 820 is configured to process data.

Optionally, the communication apparatus 800 may further include a storage unit. The storage unit may be configured to store instructions and/or data. The processing unit 820 may read the instructions and/or the data in the storage unit.

In an implementation, the communication apparatus 800 may be configured to perform actions performed by execution bodies in the foregoing method 300.

In an example, the communication apparatus 800 may be a source terminal device or a component that may be configured in the source terminal device. The transceiver unit 810 is configured to perform a receiving/sending-related operation on the source terminal device side in the method 300, and the processing unit 820 is configured to perform a processing-related operation on the source terminal device side in the method 300.

In another example, the communication apparatus 800 may be a first relay device or a component that may be configured in the first relay device. The transceiver unit 810 is configured to perform a receiving/sending-related operation on the first relay device side in the method 300, and the processing unit 820 is configured to perform a processing-related operation on the first relay device side in the method 300.

In still another example, the communication apparatus 800 may be a target terminal device or a component that may be configured in the target terminal device. The transceiver unit 810 is configured to perform a receiving/sending-related operation on the target terminal device side in the method 300, and the processing unit 820 is configured to perform a processing-related operation on the target terminal device side in the method 300.

In another implementation, the communication apparatus 800 may be configured to perform actions performed by execution bodies in the foregoing method 500.

In an example, the communication apparatus 800 may be a first terminal device or a component that may be configured in the first terminal device. The transceiver unit 810 is configured to perform a receiving/sending-related operation on the first terminal device side in the method 400, and the processing unit 820 is configured to perform a processing-related operation on the first terminal device side in the method 400.

In another example, the communication apparatus 800 may be a second terminal device or a component that may be configured in the second terminal device. The transceiver unit 810 is configured to perform a receiving/sending-related operation on the second terminal device side in the method 400, and the processing unit 820 is configured to perform a processing-related operation on the second terminal device side in the method 400.

In still another example, the communication apparatus 800 may be a target terminal device or a component that may be configured in the target terminal device. The transceiver unit 810 is configured to perform a receiving/sending-related operation on the target terminal device side in the method 400, and the processing unit 820 is configured to perform a processing-related operation on the target terminal device side in the method 400.

In still another implementation, the communication apparatus 800 may be configured to perform actions performed by execution bodies in the foregoing method 500.

In an example, the communication apparatus 800 may be a second terminal device or a component that may be configured in the second terminal device. The transceiver unit 810 is configured to perform a receiving/sending-related operation on the second terminal device side in the method 500, and the processing unit 820 is configured to perform a processing-related operation on the second terminal device side in the method 500.

In another example, the communication apparatus 800 may be a source terminal device or a component that may be configured in the source terminal device. The transceiver unit 810 is configured to perform a receiving/sending-related operation on the source terminal device side in the method 500, and the processing unit 820 is configured to perform a processing-related operation on the source terminal device side in the method 500.

In still another example, the communication apparatus 800 may be a fourth terminal device or a component that may be configured in the fourth terminal device. The transceiver unit 810 is configured to perform a receiving/sending-related operation on the fourth terminal device side in the method 500, and the processing unit 820 is configured to perform a processing-related operation on the fourth terminal device side in the method 500.

FIG. 9 is a diagram of a structure of a communication apparatus 900 according to an embodiment of this application.

As shown in FIG. 9, the communication apparatus 900 includes one or more processors 910 and one or more memories 920. The one or more memories 920 store one or more computer programs, and the one or more computer programs include instructions.

In an example, the communication apparatus 900 may be the source terminal device, the first relay device, or the target terminal device in the method 300. In this case, when the instructions in the communication apparatus 900 are run by the one or more processors 910, the communication apparatus 900 is enabled to perform the technical solution performed by the source terminal device, the first relay device, or the target terminal device in the method 300.

In another example, the communication apparatus 900 may be the first terminal device, the second terminal device, or the target terminal device in the foregoing method 400. In this case, when the instructions in the communication apparatus 900 are run by the one or more processors 910, the communication apparatus 900 is enabled to perform the technical solution performed by the first terminal device, the second terminal device, or the target terminal device in the method 400.

In still another example, the communication apparatus 900 may be the second terminal device, the source terminal device, or the fourth terminal device in the foregoing method 500. In this case, when the instructions in the communication apparatus 900 are run by the one or more processors 910, the communication apparatus 900 is enabled to perform the technical solution performed by the second terminal device, the source terminal device, or the fourth terminal device in the method 500.

An embodiment of this application provides a communication system, including a source terminal device, a first relay device, and a target terminal device. The system is configured to perform the technical solution in the foregoing method 300. An implementation principle and technical effect thereof are similar to those of the foregoing method-related embodiment. Details are not described herein again.

An embodiment of this application provides a communication system, including a first terminal device, a second terminal device, and a target terminal device. The system is configured to perform the technical solution in the foregoing method 400. An implementation principle and technical effect thereof are similar to those of the foregoing method-related embodiment. Details are not described herein again.

An embodiment of this application provides a communication system, including a second terminal device, a source terminal device, and a fourth terminal device. The system is configured to perform the technical solution in the foregoing method 500. An implementation principle and technical effect thereof are similar to those of the foregoing method-related embodiment. Details are not described herein again.

An embodiment of this application provides a computer program product. When the computer program product runs on a device, the device is enabled to perform the technical solutions of the foregoing embodiments. An implementation principle and technical effect thereof are similar to those of the foregoing method-related embodiment. Details are not described herein again. In an example, the device may include the source terminal device, the first relay device, or the target terminal device in the foregoing method 300. In another example, the device may include the first terminal device, the second terminal device, or the target terminal device in the foregoing method 400. In still another example, the device may include the second terminal device, the source terminal device, or the fourth terminal device in the foregoing method 500.

An embodiment of this application provides a computer-readable storage medium. The readable storage medium includes instructions. When the instructions are run on a device, the device is enabled to perform the technical solutions of the foregoing embodiments. An implementation principle and technical effect thereof are similar. Details are not described herein again. In an example, the device may include the source terminal device, the first relay device, or the target terminal device in the foregoing method 300. In another example, the device may include the first terminal device, the second terminal device, or the target terminal device in the foregoing method 400. In still another example, the device may include the second terminal device, the source terminal device, or the fourth terminal device in the foregoing method 500.

An embodiment of this application provides a chip. The chip is configured to execute instructions. When the chip runs, the technical solutions in the foregoing embodiments are performed. An implementation principle and technical effect thereof are similar. Details are not described herein again.

A person of ordinary skill in the art may be aware that, units and algorithm steps in the examples described in combination with embodiments disclosed in this specification may be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for convenient and brief description, for detailed working processes of the foregoing system, apparatus, and unit, refer to the corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of the embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to an existing technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the communication method comprises:
receiving a first request message from a source terminal device, wherein the first request message is used to request to discover a target terminal device, and the first request message comprises an identifier of the source terminal device and an identifier of the target terminal device; and
when transmission quality of a first relay device meets a first condition and/or a capability of the first relay device meets a second condition, sending, by the first relay device, a second request message to the target terminal device based on the first request message, wherein
the transmission quality of the first relay device is determined based on the first request message;
the second condition comprises a condition related to quality of service QoS; and
the second request message is used to request to discover the target terminal device, and the second request message comprises the identifier of the source terminal device, the identifier of the target terminal device, and an identifier of the first relay device.

2. The communication method according to claim 1, wherein that transmission quality of a first relay device meets a first condition comprises:
the transmission quality of the first relay device is greater than or equal to a first threshold; or
the transmission quality of the first relay device is greater than or equal to a first threshold, and the transmission quality of the first relay device is less than or equal to a second threshold, wherein the second threshold is greater than the first threshold.

3. The communication method according to claim 1 or 2, wherein the first request message comprises a first quality of service QoS requirement of the source terminal device on the source terminal device and the target terminal device.

4. The communication method according to claim 3, wherein that a capability of the first relay device meets a second condition comprises:
the capability of the first relay device meets the first QoS requirement.

5. The communication method according to any one of claims 1 to 4, wherein the communication method further comprises:
receiving a first response message for the second request message from the target terminal device; and
sending a second response message for the first request message to the source terminal device, wherein the second response message comprises the identifier of the first relay device and/or the identifier of the target terminal device.

6. The communication method according to claim 5, wherein the sending a second response message for the first request message to the source terminal device comprises:
determining, based on first reference information and/or second reference information, whether to send the second response message to the source terminal device, wherein
the first reference information comprises transmission quality of the first response message; and
the second reference information comprises whether a unicast connection is established between the first relay device and the source terminal device.

7. The communication method according to claim 6, wherein the determining, based on first reference information, whether to send the second response message to the source terminal device comprises:
when the transmission quality of the first response message is greater than or equal to a third threshold, determining to send the second response message to the source terminal device; or
when the transmission quality of the first response message is greater than or equal to a third threshold and the transmission quality of the first response message is less than or equal to a fourth threshold, determining to send the second response message to the source terminal device, wherein the fourth threshold is greater than the third threshold.

8. The communication method according to claim 6 or 7, wherein the determining, based on second reference information, whether to send the second response message to the source terminal device comprises:
when the unicast connection is established between the first relay device and the source terminal device, determining to send the second response message to the source terminal device.

9. The communication method according to any one of claims 5 to 8, wherein after the sending a second response message to the source terminal device, the communication method further comprises:
receiving a third request message from the source terminal device, wherein the third request message is used to request to establish a first unicast connection, the third request message comprises a second QoS requirement of the source terminal device on the first relay device and the target terminal device, and the first unicast connection is a connection between the source terminal device and the first relay device; and
when the capability of the first relay device meets the second QoS requirement, establishing the first unicast connection to the source terminal device; or
when the capability of the first relay device does not meet the second QoS requirement, skipping establishing the first unicast connection to the source terminal device.

10. The communication method according to claim 9, wherein after the establishing the first unicast connection to the source terminal device, the communication method further comprises:
sending a fourth request message to the target terminal device, wherein the fourth request message is used to request to establish a second unicast connection, and the second unicast connection is a connection between the target terminal device and the first relay device;
receiving a third response message from the target terminal device, wherein the third response message comprises a third QoS requirement of the target terminal device on the first relay device and the source terminal device; and
when the capability of the first relay device meets the third QoS requirement, establishing the second unicast connection to the target terminal device; or
when the capability of the first relay device does not meet the third QoS requirement, skipping establishing the second unicast connection to the target terminal device.

11. The communication method according to any one of claims 1 to 10, wherein when a first link is established between the source terminal device and the target terminal device, and transmission quality of a second link and/or a third link does not meet a quality transmission condition or the second link and/or the third link are/is interrupted, that the first request message is used to request to discover a target terminal device comprises that the first request message is used to request to rediscover the target terminal device, wherein the second link is a link between a second relay device and the target terminal device, and the third link is a link between the second relay device and the source terminal device.

12. A communication method, wherein the communication method comprises:
receiving a first message from each of a plurality of first terminal devices, wherein the first message is used to request to discover a target terminal device, and the first message comprises an identifier of the first terminal device and an identifier of the target terminal device;
determining at least one second terminal device in the plurality of first terminal devices based on first information, second information, and/or third information; and
sending a second message to the at least one second terminal device, wherein the second message indicates that the target terminal device is discovered, and the second message comprises the identifier of the target terminal device, wherein
the first information indicates a direct path or an indirect path between the first terminal device and the target terminal device, and quality of transmission between the first terminal device and the target terminal device, wherein the quality of transmission between the first terminal device and the target terminal device is determined based on the first message;
the second information indicates whether a unicast connection is established between the first terminal device and the target terminal device; and
the third information indicates a first quality of service QoS requirement of a source terminal device on the source terminal device and the target terminal device.

13. The communication method according to claim 12, wherein the determining a plurality of second terminal devices in the plurality of first terminal devices based on first information and second information comprises:
determining, based on the first information, whether a first terminal device that meets a third condition exists in the plurality of first terminal devices; and
when a first terminal device that meets the third condition exists in the plurality of first terminal devices, determining the first terminal device that meets the third condition as the second terminal device; or
when no first terminal device that meets the third condition exists in the plurality of first terminal devices, determining, based on the second information, whether a first terminal device that meets a fourth condition exists in the plurality of first terminal devices, wherein
the third condition comprises that there is the direct path between the first terminal device and the target terminal device, and the quality of transmission between the first terminal device and the target terminal device is greater than or equal to a fifth threshold; and
the fourth condition comprises that the unicast connection is established between the first terminal device and the target terminal device.

14. The communication method according to claim 13, wherein the determining, based on the second information, whether a first terminal device that meets a fourth condition exists in the plurality of first terminal devices comprises:
when a first terminal device that meets the fourth condition exists in the plurality of first terminal devices, determining the first terminal device that meets the fourth condition as the second terminal device; or
when no first terminal device that meets the fourth condition exists in the plurality of first terminal devices, determining the second terminal device in the plurality of first terminal devices based on fourth information, wherein
the fourth information comprises the quality of transmission between the first terminal device and the target terminal device.

15. The communication method according to claim 14, wherein the determining the second terminal device in the plurality of first terminal devices based on fourth information comprises:
determining, based on the fourth information, whether a first terminal device that meets a fifth condition exists in the plurality of first terminal devices; and
when a first terminal device that meets the fifth condition exists in the plurality of first terminal devices, determining the first terminal device that meets the fifth condition as the second terminal device; or
when no first terminal device that meets the fifth condition exists in the plurality of first terminal devices, determining, as the second terminal device, a first terminal device that has the direct path to the target terminal device in the plurality of first terminal devices, wherein
the fifth condition comprises that there is the indirect path between the first terminal device and the target terminal device, and the quality of transmission between the first terminal device and the target terminal device is greater than a sixth threshold; or
the fifth condition comprises that there is the indirect path between the first terminal device and the target terminal device, and both the quality of transmission between the first terminal device and the target terminal device and quality of transmission between the first terminal device and the source terminal device are greater than a seventh threshold.

16. The communication method according to claim 15, wherein the first message comprises the quality of transmission between the first terminal device and the source terminal device.

17. The communication method according to claim 15 or 16, wherein when a plurality of second terminal devices are determined, the communication method further comprises:
determining a third terminal device in the plurality of second terminal devices, and using the third terminal device as a final second terminal device, wherein
the third terminal device is a terminal device whose quality of transmission with the target terminal device is highest in the plurality of second terminal devices; or
the third terminal device is a terminal device whose quality of transmission with the target terminal device and quality of transmission with the source terminal device are both highest in the plurality of second terminal devices.

18. The communication method according to claim 12, wherein the determining a plurality of second terminal devices in the plurality of first terminal devices based on second information comprises:
determining, as the second terminal device, a first terminal device that has established a unicast connection to the target terminal device in the plurality of first terminal devices.

19. The communication method according to claim 18, wherein the determining, as the second terminal device, a first terminal device that has established a unicast connection to the target terminal device in the plurality of first terminal devices comprises:
determining, as the second terminal device, a first terminal device that has established a unicast connection to the target terminal device in the plurality of first terminal devices and whose quality of transmission with the target terminal device is greater than or equal to an eighth threshold.

20. The communication method according to claim 12, wherein the determining a plurality of second terminal devices in the plurality of first terminal devices based on third information comprises:
determining, as the second terminal device, a first terminal device that meets the first QoS requirement in the plurality of first terminal devices.

21. The communication method according to claim 12 or 20, wherein the first message comprises the first QoS requirement.

22. A communication method, wherein the communication method comprises:
sending a first request message, wherein the first request message is used to request to discover a target terminal device, and the first request message comprises an identifier of a source terminal device and an identifier of the target terminal device;
receiving a third message from each of a plurality of second terminal devices, wherein the third message indicates that the target terminal device is discovered, and the third message comprises an identifier of the second terminal device or the third message comprises the identifier of the second terminal device and the identifier of the target terminal device;
determining a fourth terminal device in the plurality of second terminal devices based on sixth information and/or seventh information; and
establishing a unicast connection to the target terminal device via the fourth terminal device, wherein
the sixth information indicates a direct path or an indirect path between the second terminal device and the source terminal device and quality of transmission between the second terminal device and the source terminal device, and the quality of transmission between the second terminal device and the source terminal device is determined based on the third message; and
the seventh information indicates whether a unicast connection is established between the second terminal device and the source terminal device.

23. The communication method according to claim 22, wherein the determining a fourth terminal device in the plurality of second terminal devices based on sixth information and seventh information comprises:
determining, based on the sixth information, whether a fourth terminal device that meets a sixth condition exists in the plurality of second terminal devices; and
when a second terminal device that meets the sixth condition exists in the plurality of second terminal devices, determining the second terminal device that meets the sixth condition as the fourth terminal device; or
when no second terminal device that meets the sixth condition exists in the plurality of second terminal devices, determining, based on the seventh information, whether a second terminal device that meets a seventh condition exists in the plurality of second terminal devices, wherein
the sixth condition comprises that there is the direct path between the second terminal device and the source terminal device, and the quality of transmission between the second terminal device and the source terminal device is greater than or equal to a ninth threshold; and
the seventh condition comprises that the unicast connection is established between the second terminal device and the source terminal device.

24. The communication method according to claim 23, wherein the determining, based on the seventh information, whether a second terminal device that meets a seventh condition exists in the plurality of second terminal devices comprises:
when a second terminal device that meets the seventh condition exists in the plurality of second terminal devices, determining the second terminal device that meets the seventh condition as the fourth terminal device; or
when no second terminal device that meets the seventh condition exists in the plurality of second terminal devices, determining the fourth terminal device in the plurality of second terminal devices based on eighth information, wherein
the eighth information comprises the quality of transmission between the second terminal device and the source terminal device; or
the eighth information comprises quality of transmission between the second terminal device and the target terminal device and the quality of transmission between the second terminal device and the source terminal device.

25. The communication method according to claim 24, wherein the determining the fourth terminal device in the plurality of second terminal devices based on eighth information comprises:
determining, based on the eighth information, whether a second terminal device that meets an eighth condition exists in the plurality of first terminal devices; and
when a second terminal device that meets the eighth condition exists in the plurality of second terminal devices, determining the second terminal device that meets the eighth condition as the fourth terminal device; or
when no second terminal device that meets the eighth condition exists in the plurality of second terminal devices, determining, as the fourth terminal device, a second terminal device that has the direct path to the source terminal device in the plurality of second terminal devices, wherein
the eighth condition comprises that there is the indirect path between the second terminal device and the source terminal device, and the quality of transmission between the second terminal device and the source terminal device is greater than a tenth threshold; or
the eighth condition comprises that there is the indirect path between the second terminal device and the source terminal device, and both the quality of transmission between the second terminal device and the target terminal device and the quality of transmission between the second terminal device and the source terminal device are greater than an eleventh threshold.

26. The communication method according to claim 25, wherein the third message comprises the quality of transmission between the second terminal device and the target terminal device.

27. The communication method according to claim 25 or 26, wherein when a plurality of fourth terminal devices are determined, the communication method further comprises: determining a fifth terminal device in the plurality of fourth terminal devices, and using the fifth terminal device as a final fourth terminal device, wherein
the fifth terminal device is a terminal device whose quality of transmission with the target terminal device is highest in the plurality of fourth terminal devices; or
the fifth terminal device is a terminal device whose quality of transmission with the target terminal device and quality of transmission with the source terminal device are both highest in the plurality of fourth terminal devices.

28. The communication method according to claim 22, wherein the determining a fourth terminal device in the plurality of second terminal devices based on seventh information comprises:
determining, as the fourth terminal device, a second terminal device that has established a unicast connection to the source terminal device in the plurality of second terminal devices.

29. The communication method according to claim 28, wherein the determining, as the second terminal device, a first terminal device that has established a unicast connection to the target terminal device in the plurality of first terminal devices comprises:
determining, as the fourth terminal device, a first terminal device that has established a unicast connection to the target terminal device in the plurality of first terminal devices and whose quality of transmission with the target terminal device is greater than or equal to a twelfth threshold.

30. The communication method according to any one of claims 22 to 29, wherein when a first link is established between the source terminal device and the target terminal device, and transmission quality of a second link and/or a third link does not meet a quality transmission condition or the second link and/or the third link are/is interrupted, that the first request message is used to request to discover a target terminal device comprises that the first request message is used to request to rediscover the target terminal device, wherein the second link is a link between a second relay device and the target terminal device, and the third link is a link between the second relay device and the source terminal device.

31. The communication method according to claim 30, wherein when the second link and/or the third link are/is interrupted, and before the source terminal device sends the first request message, the communication method further comprises:
receiving a link interruption message sent by the second relay device, wherein the link interruption message indicates that the link between the second relay device and the target terminal device is interrupted; and
releasing an end-to-end unicast connection established between the source terminal device and the target terminal device, and context information of unicast connections associated with the second link and the third link.

32. A communication system, wherein the communication system comprises a first relay device, a target terminal device, and/or a source terminal device, the first relay device is configured to perform the communication method according to any one of claims 1 to 11, and/or the target terminal device is configured to perform the communication method according to any one of claims 12 to 21, and/or the source terminal device is configured to perform the communication method according to any one of claims 22 to 31.

33. A communication apparatus, comprising a module or a unit configured to perform the communication method according to any one of claims 1 to 31.

34. A communication apparatus, comprising:
one or more processors;
one or more memories; and
one or more computer programs, wherein the one or more computer programs are stored in the one or more memories, the one or more computer programs comprise instructions, and when the instructions are executed by the one or more processors, the communication apparatus is enabled to perform the communication method according to any one of claims 1 to 31.

35. A computer-readable storage medium, comprising computer instructions, wherein when the computer instructions are run on a communication apparatus, the communication apparatus is enabled to perform the communication method according to any one of claims 1 to 31.

36. A chip, comprising at least one processor and an interface circuit, wherein the interface circuit is configured to provide program instructions or data for the at least one processor, and the at least one processor is configured to execute the program instructions, to implement the communication method according to any one of claims 1 to 31.

37. A computer program product, wherein the computer program product comprises computer instructions; and when a part or all of the computer instructions are run on a computer, the communication method according to any one of claims 1 to 31 is performed.
